(19) **Europäisches Patentamt / European Patent Office / Office européen des brevets**

(11) **EP 4 179 260 B1**

(12) **EUROPEAN PATENT SPECIFICATION**

(45) Date of publication and mention
of the grant of the patent:
**12.02.2025  Bulletin 2025/07**

(21) Application number: **21748944.2**

(22) Date of filing: **06.07.2021**

(51) International Patent Classification (IPC):
**F24D 19/10** *(2006.01)*　　**H05B 1/02** *(2006.01)*
**G05B 17/02** *(2006.01)*　　**G05B 15/02** *(2006.01)*

(52) Cooperative Patent Classification (CPC):
**H05B 1/0283; F24D 19/1009; G05B 17/02;**
F24D 2220/042; G05B 15/02; G05B 2219/163;
G05B 2219/2614

(86) International application number:
**PCT/IB2021/056034**

(87) International publication number:
**WO 2022/009083 (13.01.2022 Gazette 2022/02)**

(54) **SYSTEM AND METHOD OF ADAPTIVE CONTROL OF THE TEMPERATURE OF A VECTOR FLUID OF AN HEATING SYSTEM**

SYSTEM UND VERFAHREN ZUR ADAPTIVEN REGELUNG DER TEMPERATUR EINER VEKTORFLÜSSIGKEIT EINES HEIZSYSTEMS

SYSTÈME ET PROCÉDÉ DE COMMANDE ADAPTATIVE DE LA TEMPÉRATURE D'UN FLUIDE VECTEUR D'UN SYSTÈME DE CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2020  IT 202000016471**

(43) Date of publication of application:
**17.05.2023  Bulletin 2023/20**

(73) Proprietor: **Alperia Green Future S.r.l.**
**39100 Bolzano (IT)**

(72) Inventors:
• **BARBONI, Luca**
**39100 Bolzano (IT)**

• **FARELLA, Giorgia**
**39100 Bolzano (IT)**
• **BARTUCCI, Giovanni**
**39100 Bolzano (IT)**

(74) Representative: **Di Bernardo, Antonio et al**
**Thinx S.r.l.**
**P.le Luigi Cadorna, 10**
**20123 Milano (IT)**

(56) References cited:
**EP-A1- 0 632 356**　　　**EP-A2- 2 009 358**
**WO-A1-2019/081501**　　**WO-A1-2019/129800**
**CN-A- 107 062 383**

## Description

### TECHNICAL FIELD

The present invention relates to the field of heating systems for residential units, whether they are flats, buildings or building complexes.

### BACKGROUND

Nowadays there are different systems for heating residential units, such as flats and buildings.

Some of the residential units have independent heating, i.e. each unit has its own heating system. For example, the residential unit may be equipped with a boiler that heats water that is circulated through radiating elements inside the residential unit. Alternatively, the residential unit can be equipped with an HVAC (Heat Ventilation Air conditioning and Cooling) system, wherein a heat pump heats or cools an air flow that is sent into the residential unit.

Other solutions involve the use of a central heating system serving several residential units. This is the case in apartment blocks, where a central heating unit - a boiler or a condominium HVAC system - heats a vector fluid (water or air, respectively), which is sent to the different residential units. Each residential unit is then equipped with a regulation system to increase or decrease the temperature inside the residential unit. For example, in the case of boilers, the water heated by the boiler is sent to radiators equipped with valves that can be regulated manually or by a thermostat inside the residential unit.

Yet another form of heating is district heating. In this case, a large thermal power station heats water that is sent to several buildings, each of which is then equipped with pumps to distribute the hot water to the different residential units inside the building.

Regardless of the size and type (boiler or HVAC) of the heating system, there is the issue of optimising the energy consumption needed to heat the vector fluid (water or air) that is sent to the residential units.

Various means for controlling heating systems have been proposed in the art, for example WO 2019/081501 discloses an energy management system for proactively determining and regulating a flow temperature of a heating system of a building. A system controller receives a room temperature of one room of a building and is connected to the building's heating system to regulate the system's flow temperature based on the measured temperature.

The management system of WO 2019/081501 is based on a static estimation of the building's thermal capacity and its control capability is limited to modifying the flow temperature of the heating system according to a forecast of the external temperature trend.

Furthermore, heating control systems based on a model of the building to be heated are known in the art through EP 2009358, EP 0632356, WO 2019/129800, and CN 107062383.

### OBJECTS AND SUMMARY OF THE INVENTION

An object of the present invention is to overcome the disadvantages of the prior art.

In particular, it is an object of the present invention to present a method and an associated heating system for reducing the energy consumption associated with heating the vector fluid and, at the same time, ensuring a substantially constant and comfortable ambient temperature within a heated building or residential unit.

These and other objects of the present invention are achieved by a method incorporating the features of the appended claims, which form an integral part of the present description.

According to a first aspect, the invention relates to a method of controlling the temperature of a vector fluid of a heating system for heating at least a portion of a building. The heating system considered comprises, but is not limited to:

heating means configured to heat the vector fluid in response to a temperature command,
at least one heating element arranged inside said at least a portion of the building, the at least one radiating element being configured to receive the vector fluid and give heat to the surrounding environment,
a temperature sensor configured to measure the ambient temperature inside said at least one portion of the building and transmits a value of the measured temperature,
a control unit configured to receive the measured temperature value and to generate a command for controlling the heating means based on said measured temperature value.

The method envisages that the control unit:

-    implements a continuous control mode which comprises generating a continuous control command to maintain a target temperature value in said at least a portion of the building,

- implements an on-off control mode which comprises generating an off control command when the target temperature value is reached in said at least a portion of the building or when the continuous control command is kept at a minimum value for a predetermined period of time, and
- provides said continuous control command or said off control command to the heating means.

The method further advantageously comprises having the control unit:

- implementing a mathematical model of the integral or pseudo-integral type configured to estimate the value of the ambient temperature as a function of the temperature of the vector fluid and a temperature outside the building, and
- calculating at least one operating parameter of the continuous mode on the basis of said mathematical model of the integral or pseudo-integral type.

Hereinafter, the term 'off control command' or the term 'off command' means a command given to the heating means to bring a set-point value of the temperature of the vector fluid to a minimum value or, alternatively, a command which inhibits the boiler from being switched on.

Thanks to this solution, it is possible to achieve dual-mode control of the temperature of the vector fluid, which makes it possible to achieve high energy savings and, at the same time, to maintain an ambient temperature in the building that ensures optimal comfort for users. In fact, dual-mode control combines the rapid on-off mode response when the temperature of the vector fluid is far from the target temperature value, with the exact compensation of the thermal load - in particular, from variations due to changes in the outside temperature - and thus the stability of the ambient temperature guaranteed by a continuous control mode. This makes it possible to effectively control the temperature inside the building, while at the same time reducing the amount of measurements taken over time at the building and generally reducing the overall number of sensors required, simplifying the hardware, firmware and/or software requirements of the system, as well as the consumption of the measurement equipment. Furthermore, the Applicant has determined that it is possible to achieve particularly reliable control of the ambient temperature in the building while keeping the computational load of the control system low.

In one embodiment, it is further envisaged that the control unit:

- during operation in on-off control mode calculates on the basis of said integral or pseudo-integral mathematical model the target temperature value in at least a portion of the reference building.

Preferably, said at least one portion of the reference building corresponds to the at least one portion of the building to be heated or corresponds to the portion of the building characterised by a lower average ambient temperature than the other portions of the building.

This also makes it possible to optimise the operation of the heating system in on-off mode according to the calculated mathematical model.

In one embodiment, the step of calculating at least one operational parameter of the continuous control mode on the basis of said integral or pseudo-integral type mathematical model envisages using:

- a gain coefficient of said mathematical model associated with the temperature of the vector fluid output by the heating means, and
- a gain coefficient of said mathematical model associated with the temperature outside the building.

The Applicant has determined that the use of such coefficients of the mathematical model processed by the control unit allows for adaptation of the operating modes of the heating system substantially in real time, obtaining responsive and particularly effective temperature control, at the same time, requiring a limited amount of computation.

In one embodiment, it is envisaged that the control unit, at a first activation of the heating system, implements a min-max operating mode instead of continuous control mode. In particular, the min-max operating mode being configured for:

- generating a first min-max control command such as to impose a heating of the vector fluid as long as the measured temperature is lower than the target temperature value, and
- generating a second min-max control command such as to impose a cooling of the vector fluid as long as the measured temperature is higher than a limit value.

Furthermore, during each heating of the vector fluid, the method comprises having the control unit:

detecting a trend in the ambient temperature,

using said detection to calculate the value of at least one operational parameter of the mathematical model of the integral or pseudo-integral type, and

switching from the min-max operation mode to continuous control mode after having calculated a predetermined number of values of the at least one operating parameter of the mathematical model of the integral or pseudo-integral type.

Preferably, the first control command imposes a maximum temperature of the vector fluid and the second control command imposes a minimum temperature of the vector fluid determined by applying the theory of asymptotic properties of prediction error models (PEM) and the asymptotic theory of Ljung (1985).

This solution makes it possible to quickly and efficiently acquire a quantity of data necessary to reliably calculate the integral or pseudo-integral mathematical model and, at the same time, to guarantee that the ambient temperature - or the perceived temperature - is maintained at or around the target temperature value, thus guaranteeing the comfort of the building's users during such system learning phase.

In one embodiment, it is envisaged that the control unit:

- estimates an initial radiant temperature of the heating member starting from a temperature of the vector fluid at the inlet of the heating means,
- estimates a second radiant temperature of said at least one portion of the building in which the heating element is positioned,
- determines the operating temperature as the average of the measured ambient temperature and of a weighted average of radiant temperatures,

where the target temperature value is a desired value of the operating temperature or the ambient temperature does not reach another predetermined lower limit value.

Advantageously, it is envisaged that the control unit maintains an on-off control command during the on-off control mode until the first radiant temperature reaches a predetermined lower limit value.

Thanks to this solution, it is possible to determine in a simple way and with a very limited number of sensors the operating temperature - essentially corresponding to the temperature perceived by users - inside the building - preferably, at least in the coldest portion of the building. Advantageously, using the operating temperature as a reference for assessing the reaching of the target temperature value allows a significant reduction in the consumption of the heating system without affecting the comfort level of the users inside the building. In addition, taking into account heat loss by estimating the radiant temperature of the heating element allows for additional switch-off periods of the heating means, at the same time, ensuring that users do not perceive a change in temperature in the building.

In one embodiment, the continuous control mode involves processing the continuous control command by means of a proportional-integrative function applied to the temperature estimated by the model or to the temperature measured by the sensor, where the proportional coefficient and the integrative coefficient are calculated on the basis of the integral or pseudo-integral mathematical model.

Preferably, the proportional and supplementary coefficients are calculated according to the so-called λ-tuning technique, so as to ensure that the target temperature value is reached within a predetermined time each time the heating means is switched on.

In one embodiment, the continuous control mode further involves processing a feed-forward term by means of a feed-forward function applied to a temperature outside the building, where the feed-forward coefficient is calculated on the basis of the integral or pseudo-integral mathematical model, and processing the continuous control command as the combination of the result of the proportional-integral function and the feed-forward term.

Even more preferably, the integral or pseudo-integral mathematical model involves estimating an integral gain operating parameter by two different methods. In detail, the model involves assessing the difference between two estimates, as well as the variability, of the operating parameter. If both of these conditions fall within predetermined threshold values, the operating parameter of the integral or pseudo-integral model is used to calculate the proportional coefficient and the integrative coefficient of the proportional-integrative function, as well as the feed-forward coefficient of the feed-forward function. Otherwise, if the conditions do not fall within the threshold values, a default coefficient is used to determine the proportional coefficient and the integrative coefficient of the proportional-integrative function and the feed-forward coefficient of the feed-forward function.

For example, in one embodiment the proportional coefficient is calculated as:

$$k_c = \frac{2\lambda + \Delta tr}{(k_p + 2\sigma_p) \cdot (1 + \Delta tr)^2}$$

where λ is a time within which it is desired to reach the target temperature value, $\Delta tr$ is a time indicating a delay between a change in the delivery temperature - i.e. of the vector fluid output by the heating means - and a change in the value of the ambient temperature, $k_p$ is a determined parameter defined by the mathematical model of the integral or pseudo-integral type, while $2\sigma_p$ is the standard deviation associated with parameter $k_p$.

In addition, the integrative coefficient *Ti* is calculated as:

$$T_i = 0.8 \cdot (2\lambda + \Delta tr).$$

Finally, the advance coefficient $k_{ff}$ *is* calculated as:

$$k_{ff} = \frac{-k_d}{(k_p + 2\sigma_p)}.$$

Thanks to the solution that integrates one or more, preferably all, of the above features, it is possible to implement the continuous control mode that can dynamically adapt to variations in the building's thermal system (or a portion thereof) and compensate for changes in thermal load rapidly. This makes it possible to reach the target temperature value in a predetermined time and to maintain the ambient - or operating - temperature at the target temperature value in a particularly stable manner.

In one embodiment, the continuous control mode involves processing the continuous control command by means of a predictive control that receives as input the temperature estimated by the model or the temperature measured by the sensor and the temperature outside the building. Preferably, predictive control is a Model Predictive Control (MPC), optionally configured to acquire future external temperature values, for example, from a remote entity external to the heating system such as a server implementing a weather forecast service.

With this variant, a continuous control mode can be achieved that reacts more precisely to changes in the building's thermal system at the price of a higher computational cost.

In one embodiment, it is envisaged that the control unit:

while the on-off control mode is implemented, generates an ignition control command when the measured temperature assumes a predetermined limit value, wherein said ignition control command requires the heating means to transfer the maximum amount of heat possible to the vector fluid until reaching the target temperature in the at least one portion of the building, and
switches from the on-off to the continuous control mode when the target temperature value is reached in the at least one portion of the building.

This solution allows the target temperature to be reached in the shortest possible time at the cost of higher energy consumption than in the previous case.

According to a further aspect, the invention relates to a heating system comprising conduits for transporting a vector fluid within a building, the at least one heating element arranged within at least one portion of the building, the at least one heating element being configured to receive the vector fluid and release heat to the surrounding environment, means for heating the vector fluid, the at least one sensor capable of transmitting ambient temperature measurements within the building, and a control unit operatively connected to the sensor and the heating means and configured to implement a method of controlling the temperature of the vector fluid as set out above and further described below.

Further features and advantages of the present invention will be more apparent from the description of the accompanying drawings.

## BRIEF DESCRIPTION OF THE DRAWINGS

The invention will be described below with reference to some examples, provided for explanatory and non-limiting purposes, and illustrated in the accompanying drawings. These drawings illustrate different aspects and embodiments of the present invention and, where appropriate, reference numerals illustrating similar structures, components, materials and/or elements in different figures are indicated by similar reference numbers.

Figure 1 shows a building with residential units heated by a central heating system;

Figure 2 is a flow chart of a method of controlling the temperature of the vector fluid used to heat the building in figure 1;

Figure 3 is a block diagram of the control unit of the central heating system in figure 1;

Figure 4 is a flow chart of a method for estimating the ambient temperature implemented by the control unit in figure 3;

Figure 5 is a block diagram of the control unit of the central heating system in figure 1 in which additional blocks to figure 3 have been shown;

Figure 6 provides a qualitative illustration of the trend of the ambient temperature in the building in figure 1 and the trend of the delivery temperature of the vector fluid as a function of the time of the central heating system during a system learning step;

Figure 7 is a flow chart of a process for regulating the ambient temperature implemented by the control unit in figures 3 and 5;

Figure 8 provides a qualitative illustration of the trend of the ambient temperature in the building in figure 1 and the trend of the delivery temperature of the vector fluid as a function of the time of the central heating system during a dual temperature control mode;

Figure 9 is a block diagram of a part of the control unit in figures 3 and 5;

Figure 10 is a flow chart of a process for calculating the control parameters used by the control unit in figures 3, 5 and 9;

Figure 11 is a graph illustrating three curves of the trend of the radiant temperature of the radiators as a function of time after the boiler has been turned off;

Figure 12 is a flow chart of a process for ambient temperature regulation implemented by the control unit in figures 3, 5 and 9;

Figure 13 provides a qualitative illustration of the trend of the ambient temperature in the building in figure 1 and the trend of the delivery temperature of the vector fluid as a function of the time of the central heating system during a dual control mode with temperature coasting;

Figure 14 is a flow chart of an ambient temperature coasting process implemented by the control unit of figures 3, 5 and 9;

Figure 15 is a flow chart of a further process for ambient temperature coasting implemented by the control unit in figures 3, 5 and 9; and

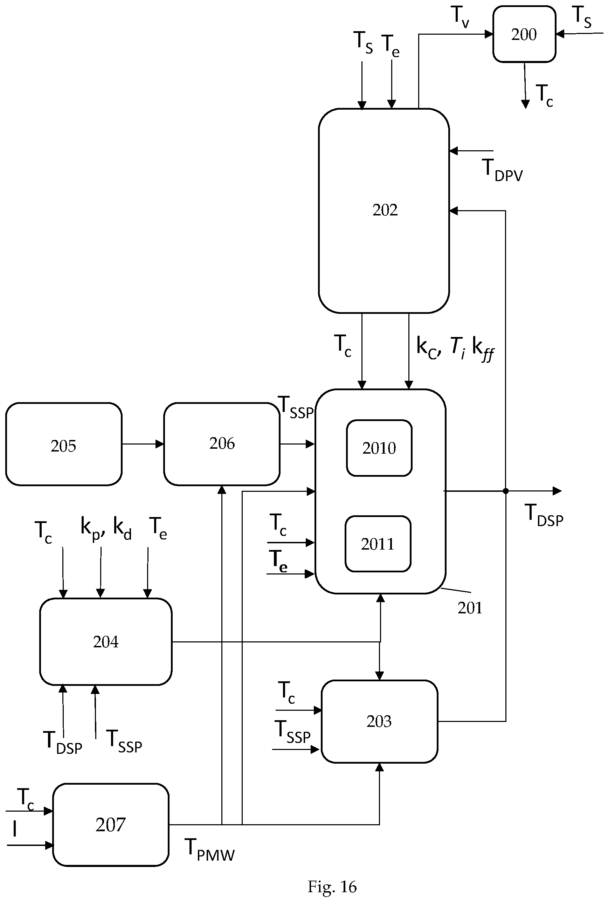

Figure 16 is a block diagram of the control unit of the central heating system in figure 1 in which optional blocks with respect to figure 3 and figure 5 are shown.

## DETAILED DESCRIPTION OF THE INVENTION

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise stated.

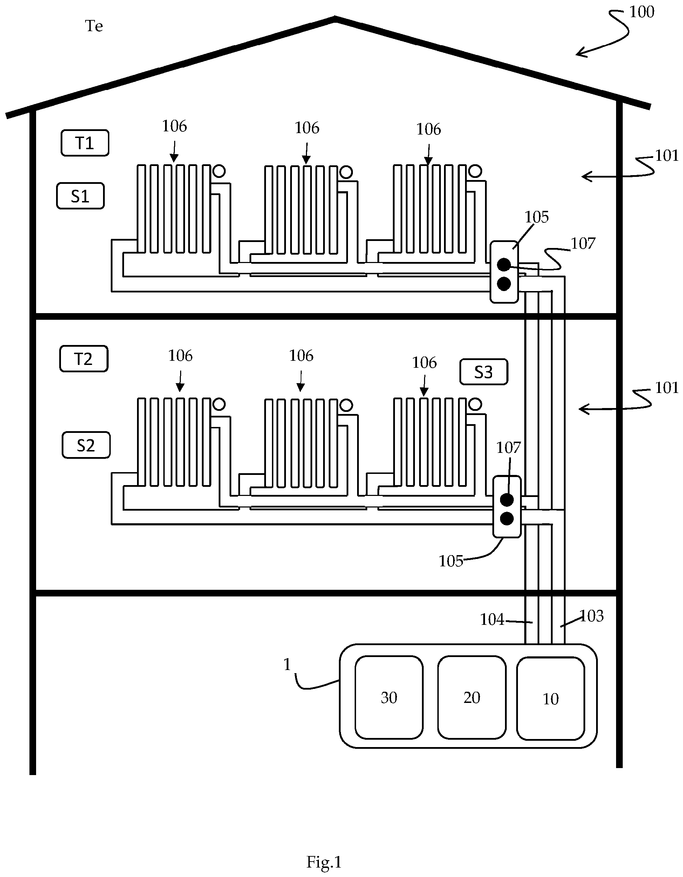

Figure 1 illustrates a building 100 comprising a plurality of residential units 101 to be heated. The building is equipped with a heating system comprising a central heating unit 1 which heats a vector fluid and sends it to the residential units where the vector fluid yields heat to the environment by heating it. The central heating unit may be installed locally within the building, as shown in figure 1, or be a remote unit serving the building 100 and possibly also other buildings. For the sake of clarity, in the following example, the central heating unit is a boiler equipped with a burner 10 which heats water by sending it into a delivery conduit 103 to which manifolds 105 are connected, from which each residential unit on the floor receives the heated water, circulates it through radiators 106 arranged in the various rooms of the residential unit, and feeds it back into a return conduit 104 which arrives at the central heating unit 1 to be heated again. Other embodiments may include the use of a heat pump apparatus, or other HVAC system capable of heating air that is sent to the residential units.

The heating unit 1 also includes a control unit 20 and a radio interface 30. The radio interface 30 receives temperature values measured by temperature sensors located in the various residential units. In the example described here there are three sensors S1, S2 and S3, but it is clear that the number can vary depending on the number of residential units. At least three sensors are preferably provided in a building at the coldest points - among those to be heated - of the building. The assessment can be made by studying the exposure of the building and identifying the coldest rooms.

The temperature sensors are preferably IoT sensors, capable of communicating with the heating unit via a radio link, e.g. Wi-Fi, Bluetooth, Zigbee, Lora, Sigfox or NB-IoT, suitable for the distances to be covered. In one embodiment, the IoT sensors are battery operated, so they can also be installed in existing buildings without the need to bring new power lines to power them in the optimal locations, i.e., as mentioned above, the cooler parts of the building.

Each residential unit 101 provides, in a known manner, a thermostat, indicated with the references T1 and T2 in figure 1, which controls one or more valves 107 placed at the entrance to the residential unit in order to let new hot water from the delivery conduit 103 enter the radiators 106.

In a known manner, the user sets a desired temperature value or temperature time trend unit on the residential unit thermostat and the thermostat opens and closes the valve 107 to reach the temperature value desired by the user.

The presence of thermostats is not essential and is only an example, as the residential unit could be equipped with thermostatic valves on the radiators that are individually regulated by a user. Again, the residential unit could be equipped with heating circuits without radiators or thermostatic valves, but with simple radiator valves that can be manually regulated by a user.

As each user adjusts - either manually or via a thermostat - the temperature of their radiators, the heat load seen by the boiler - i.e. the amount of heat required by the boiler - varies over time.

In order to optimise the amount of heat yielded by the boiler to the delivery water, the control unit 20 is configured to implement a method for controlling the temperature of the delivery water intended for heating the building. Having determined the temperature value to which the delivery water is to be brought, in one embodiment the control unit 20 controls the burner 10 in a known way to bring the delivery water to the calculated temperature value. Given that there are already boilers which manage the burner by varying its thermal power according to a given temperature to be reached, we will not go into the merits of this mechanism here.

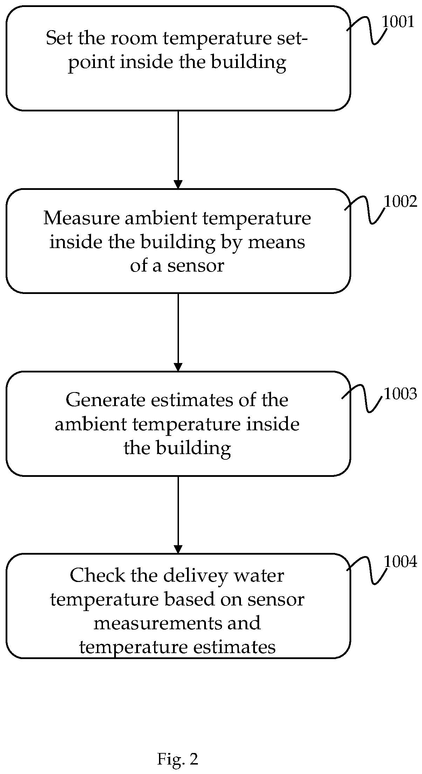

The method of controlling the delivery water temperature implemented by the control unit is illustrated in its general lines in figure 2, and envisages:

a) setting (step 1001) a desired ambient temperature set-point inside the building,
b) detecting (step 1002) ambient temperature values inside the building by means of at least one sensor,
c) generating (step 1003) at least one estimate (Tv) of the ambient temperature inside the building by means of a mathematical model,
d) controlling (step 1004) the temperature of the vector fluid on the basis of the building temperature values measured by the sensor and on the basis of the ambient temperature estimates generated by the mathematical model so as to bring the building temperature to the desired set-point value.

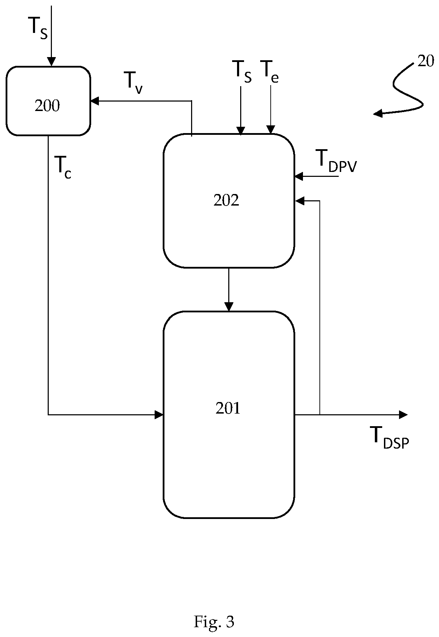

As illustrated schematically in figure 3, the control unit 20 comprises a selection module 200 which receives as input the temperature values $T_S$ measured by the environmental sensors $S_i$ and the ambient temperature estimates $T_v$ and generates as output an ambient temperature value $T_c$ which is used by the controller 201 to control the burner 10. The selection module 200 checks if the measurements of the sensors $T_S$ are valid and selects one according to a pre-determined criterion, preferably the lowest temperature $T_S$. Checking whether measurements are valid involves checking various conditions indicative of problems with the measurement sensor and/or environmental situations such that the measurement is not considered usable for control purposes, e.g. it is checked whether:

- the measured temperature value is comprised between a minimum and a maximum value which correspond to the full scale values of the measurement sensor,
- the measured value is constant for a time greater than a certain threshold value,
- the measured value is too high compared to the previous measurement - for example if it is 30% higher.
- the derivative of the measured temperature value is comprised between a minimum and a maximum value,
- the opening conditions of a window in the room where the sensor $S_i$ sending the measurement is located do not occur. The opening condition of a window is verified by checking the trend of the individual measurements of a given sensor $S_i$ with respect to the average trend of the sensors. In particular, a slow downward deviation of one or more measurements of a sensor $S_i$ is recognised as the window opening. In the case of several Si sensors installed in the building, the method involves temporarily excluding the sensor corresponding to an open window condition from the ambient temperature measurement selection logic for the controller. When the window opening condition ends, the signal is restored as usable by the selection module 200.

The ambient temperature value estimate Tv is carried out by the estimation module 202, which will be discussed in more detail below.

Periodically, the control unit 20, in particular the selection module 200, compares the ambient temperature value estimated by the estimation module 202 with the ambient temperature value $T_S$ measured by one of the sensors $S_i$. In particular, the estimated ambient temperature Tv is compared to the lowest temperature among those measured by the installed sensors $S_i$, however, it is possible to use other criteria for selecting the sensor with which to compare the estimate Tv.

Depending on the comparison, the control unit 20 regulates the frequency with which the sensors Si take measurements and transmit them to the control unit 1, where they are received by the radio interface 30 and supplied to the control unit 20. For this purpose, the control unit 20 sends a control message via the radio interface 30 to the sensors $S_i$.

In one embodiment, in the event that the estimate $T_v$ and the measurement $T_S$ coincide at less than a predetermined tolerance threshold, e.g. within 5%, then the control unit 20 reduces the measurement frequency of the actual sensor Si. Otherwise, the measurement unit increases the measurement frequency of the actual sensor Si.

In other embodiments, it is also possible to provide a tolerance range, e.g. 3% to 10%, whereby if the difference between the estimate $T_v$ and the measurement $T_S$ falls within this range then the frequency of the sensors is not changed, whereas if the difference is greater than the upper limit of the range then the frequency is increased, and if it is less than the lower limit of the range then the measurement frequency of the sensors is reduced.

Returning to the estimate of the ambient temperature Ts, this is preferably obtained by means of a machine learning algorithm of the model-based type, i.e. an artificial intelligence algorithm based on a basic model which is preferably a basic model of the integral or pseudo-integral type.

In the example described here, the basic model is of the pseudo integral type and connects the estimated ambient temperature Tv to the delivery water temperature and the temperature outside the building, according to the following relationship (1):

$$T_V(t) = \int k_p \cdot \left(T_{DSP} - T_{ref}\right) \cdot dt + \int k_d \cdot \left(T_e - T_{ref}\right) \cdot dt \qquad (1)$$

Where

- $k_p$ and $k_d$ are two parameters that vary over time - in detail $k_p$ is a gain coefficient associated with the delivery water temperature, while $k_d$ is a gain coefficient associated with the temperature outside the building,
- $T_{DSP}$ is the set-point value of the delivery water temperature,
- $T_e$ is the temperature outside the building, acquired via a sensor or through the internet or connection to a remote server,
- $T_{ref}$ is a predefined reference temperature, preferably between 18°C and 22°C and more preferably equal to 20°C.

In figure 2, the module 202 receives as input both a value of the delivery water temperature measured by means of a sensor ($T_{DPV}$), and the desired value (also called set-point, $T_{DSP}$) of the delivery water temperature provided as output by the controller 201. In this way, when a variation between command ($T_{DSP}$) and measured value ($T_{DPV}$) occurs, the system knows to expect a subsequent variation of both the measured value $T_{DPV}$ and the building temperature Ts, and can use this information to validate the temperature measurements received from the sensors $S_i$.

The module 202 also receives as input the ambient temperature values $T_S$ measured by the sensors $S_i$, so the machine learning algorithm starting from the base model can begin to estimate the model parameters, with one of the techniques known in literature, to adapt to the building consumption.

In order to make the estimate of the system parameters $k_p$ and $k_d$ more robust, the module estimates 202 $k_p$ using two different estimation procedures. If the estimate of $k_p$ obtained from the two procedures differs by less than a predefined threshold, then the values of $k_p$ and $k_d$ generated by one of the two estimation procedures are taken. Otherwise, the estimate is not considered reliable and is not passed on to the controller 201. In other words, the module 202 does not provide the module 200 with any Tv estimates, and the controller 201 will base its decisions solely on the measurements received from the sensors $T_S$ as long as the $k_p$ values obtained by the two procedures coincide at less than the predetermined threshold.

In particular, one embodiment uses a heuristic procedure based on the recognition of proper conditions for the excitation of the system to be controlled. In particular, the procedure involves looking for variations in the desired value of the delivery water temperature ($T_{DSP}$) that have sufficient energy (e.g. are greater than 8 °C) to cause a visible response of the ambient temperature inside the building. Herein, a 'visible' response means a response to a stimulus characterised by an adequate signal-to-noise ratio - for example, a signal-to-noise ratio greater than or equal to 1.8 and more preferably greater than or equal to 2 in the case of sensors typically installed in the generic boiler 10.

The model parameters are then estimated at the $T_{DSP}$ changes that satisfy the above energy criterion. When estimated, the parameters are then compared with the output of a more traditional procedure such as recursive least squares with oblivion coefficient or Kalman filter or with the output of a machine learning algorithm of regression type - for example, a support vector regression algorithm or a neural network -, which estimates identical quantities, i.e. the growth rates $k_p$ and $k_d$, linked to the boiler delivery temperature and the outdoor temperature respectively.

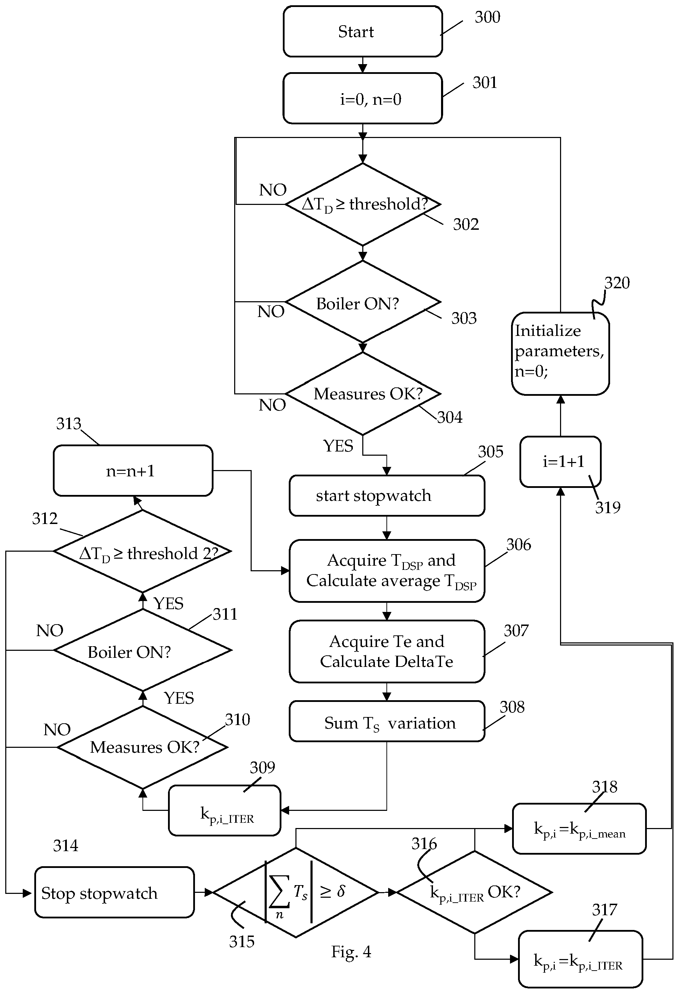

A procedure for estimating $k_p$, implemented by the module 202, is illustrated below with reference to the flowchart in figure 4. After the start of the estimation method (step 300), some parameters are initialised (step 301), in particular, a counter i which takes into account the i-th parameter $k_{p,i}$ calculated, and a counter n which takes into account the n-th sampling step performed, are initialised to the value 0; moreover, the variable $k_{p,i\_ITER}$ used in the calculation of the parameter $k_{p,i}$ is initialised to zero, and the mean value and the standard deviation of the previously calculated parameters $k_p$ are acquired.

The module 202 therefore checks whether three conditions are met to start the estimation process, in detail:

- It is checked (step 302) whether the difference (hereafter referred to as $\Delta T_D$) between the set-point value of the delivery water temperature and the delivery water temperature value exceeds a predetermined threshold value, for example 8°C. Mathematically, it is checked whether:

$$\Delta T_D = T_{DSP} - T_{DPV} \geq \varepsilon$$

Where $\varepsilon$ is the aforesaid predetermined threshold. This allows the estimate to be activated only if the controller 201 has determined the need for an increase in the delivery water temperature such that there is a noticeable deviation in the ambient temperature inside the building.

- It is checked (step 303) whether the boiler is switched on or not.
- It is checked (step 304) whether the outside temperature Te, the delivery water temperature ($T_{DPV}$) and the ambient temperature (Ts) measurements received as input are valid. This verification is similar to what was explained above with regard to the verification carried out by the selection module 200. Obviously for the delivery water temperature and the outside temperature no verification of the open window condition is carried out.

If at least one of the above conditions is not met, then the module 202 does not initiate the estimation procedure and the method returns to step 302 without producing an output estimate of $k_p$. In such a case, as described below, the values $k_p$ and $k_d$ of the mathematical model will not be updated.

If, on the other hand, all three of the above conditions are met, the module 202 proceeds to calculate the estimate of $k_p$.

First a stopwatch is started (step 305), then:

a) The set-point value of the delivery temperature $T_{DSP}$ is acquired by the controller 201 and the moving average of the variation of this value is calculated (step 306).

In practice, at each n-th sampling, the variation of the delivery temperature set-point is calculated as a moving average written in recursive form, i.e:

$\overline{\Delta T_{DSP}}(n) = \overline{\Delta T_{DSP}}(n-1) + (T_{DSP}(n) - T_{DSP}(0) - \overline{\Delta T_{DSP}}(n-1))/n$. At the first sampling step, n is zero, and there is no value $\overline{\Delta T_{DSP}}(n-1)$ to use in the above formula. For n=0, therefore, we conventionally take $\overline{\Delta T_{DSP}}(n-1)=0$. In other words, the first variation of the delivery temperature set-point value $\overline{\Delta T_{DSP}}(0)$ is calculated as the difference between the first set-point value provided by the controller 201 ($T_{DSP}(0)$) and the delivery water temperature ($T_{DPV}(0)$).

b) The current value of the outside temperature $T_e$ is acquired and the change in this value from the start of the stop watch activation is calculated (step 307).

In practice, at each n-th sampling the change in outdoor temperature from the initial value is updated as

$$\Delta T_e(n) = T_e(n) - T_e(0).$$

c) The current ambient temperature value measured by the sensors ($T_S(n)$) is acquired, the difference with respect to a previously measured temperature value ($T_S(n-1)$) is calculated (step 308) and this is added to the differences measured in the previous steps. In practice, at each n-th sampling the following telescopic sum is calculated:

$$\sum_n \Delta T_S(n) = \sum_n \left( T_S(n) - T_S(n-1) \right)$$

At the first sampling step n=0, since there is no Ts(-1) value, we conventionally take $T_S(-1)=T_S(0)$.

Next, step 309, the parameter $k_{p,i\_ITER}$ is calculated, as:

$$k_{p,i\_ITER} = \frac{\left(\sum \Delta T_S - \alpha \cdot \Delta T_e\right)/_{\Delta t}}{\overline{\Delta T_{DSP}}} \tag{2}$$

wherein

$\Delta T_{DSP}$ is the moving average of the difference of the set-point value of the delivery temperature calculated in step 306.
$\Delta T_e$ is the change in outside temperature calculated in step 307;
$\Sigma \Delta T_S$ is the sum of the ambient temperature changes calculated in step 308.
$\Delta t$ is the time interval measured by the stopwatch from when it is started (step 309) to when it is stopped (step 314).
$\alpha$ is a constant that can either be the last value $k_{d,i-1}$ of the parameter $k_d$ stored by the module 202, or be zero, or be the current value of $k_{d,i}$ calculated by one of the estimation procedures described above. In particular, at the first cycle of parameter estimation, i.e. when i=0, it is possible to either take $k_d$=0, or take the value of $k_d$ from the other estimation procedure, e.g. from the Kalman filter or the recursive least squares method or other regression method pertaining to machine learning.

Next, the method comprises checking whether the sensor measurements are valid (step 310), whether the boiler is on (step 311) and checking (step 312) whether $\Delta T_D$ at step n (i.e. $T_{DSP}(n)$ minus $T_{DPV}(n)$) is above a threshold which may be equal to the threshold $\varepsilon$ considered at step 302, or more preferably be a percentage of the value that $\Delta T_D$ had at the beginning of the estimation process, i.e. when n=0.

If all three checks are satisfied, then the value of n is increased (step 313) and the ambient temperature ($T_S$), outdoor temperature ($T_e$) and the delivery temperature set-point ($T_{DSP}$) measurements are re-sampled. Steps 305 to 313 are then repeated cyclically until one of the three checks in steps 311, 312 and 313 fails.

When the sensor measurements are invalid, the boiler is switched off or the delivery water temperature falls below a dynamic threshold value - for example a threshold value lower than the maximum value reached by a predetermined amount - such as a value less than 80% of the maximum value reached -, then the method involves stopping (step 314) the stopwatch started in step 307 and storing - at least temporarily - a new $k_{p,i}$ value which is then used to estimate the ambient temperature ($T_V$) inside the building.

In the example in Figure 4, the method envisages a number of verifications before providing the estimate of $k_{p,i}$ as output. First of all, it is checked (step 315) whether the overall change in ambient temperature measured by the sensors ($\Sigma \Delta T_S$) is greater than a predefined threshold $\delta$, e.g. 0.4 °C.

If this is not the case, then the temperature variation inside the building is not considered large enough to cause a change in the previously calculated model, so the method goes to step 318 and a value $k_{p,i}$ equal to the mean value of $k_p$ is provided as output to the algorithm. This mean value is calculated from the previously calculated and stored values of $k_{p,j}$ (with j between 0 and i-1).

If, on the other hand, $\Sigma \Delta T_S \geq \delta$, then the method involves carrying out (step 316) further checks on the calculated value $k_{p,i\_ITER}$. In particular, it checks whether

a) $k_{p\_ITER}$ is greater than zero, but at the same time less than the mean value of kp plus an uncertainty of up to 3 times the standard deviation of kp, or
b) $k_{p\_ITER}$ is greater than 0, and the mean value of $k_p$ is zero

The mean value and standard deviation of $k_p$ are calculated from the previously calculated and stored values of $k_{p,j}$ (with j comprised between 0 and i-1).

If these two conditions are also verified, then the estimation method gives as output $k_{p,i} = k_{p\_iTER}$ (step 317). Otherwise, the method goes to step 318 and a value $k_{p,i}$ equal to the mean value of $k_p$ is provided as the output to the algorithm.

Once the i-th estimate of $k_p$ has been generated, the method moves on to estimate the next parameter $k_p$, so the value of the counter i is increased by one unit (step 319) and all other parameters of the algorithm, e.g. counter n, are re-initialised (step 320) as described above in step 301. Then the method returns to repeat the checks of steps 302, 303 and 304 and proceeds to calculate the next value $k_{p,i+1}$.

As mentioned above, each i-th estimate of $k_p$ generated by the method described above with reference to figure 4, is compared with the estimate obtained by a different procedure, e.g. using a recursive system for parameter estimation, in particular a Kalman filter, a recursive least squares identification system with an oblivion coefficient or a machine learning algorithm of the regression type - for example, a support vector regression algorithm or a neural network.

In detail, if there is a discrepancy between the $k_p$ parameters estimated by the two estimation procedures, then the model is out of date. Consequently, the ambient temperature estimate $T_V$ is calculated using the $k_p$ and $k_d$ values calculated in the previous iteration of the method described above. Differently, if there is a match between the $k_p$ parameters estimated by the two estimation procedures, the model is updated and the estimation module 202 and the ambient temperature estimation Tv is performed based on the newly calculated $k_p$ and $k_d$ values. The ambient temperature estimate Tv is then provided by the estimation module to the selection module 200. The selection module 200 is configured to verify that the estimated value Tv substantially corresponds to the measured temperature $T_S$ (at the times when the measurement $T_S$ is available). If so, the selection module 200 requires $T_C$ to correspond to Tv. If this is not the case, the model is considered to be unreliable and $T_C$ therefore corresponds to $T_S$ - until a subsequent check of the value Tv proves the reliability of the model. If the estimate Tv proves not to be consistent with the measurements $T_S$, the sampling period of the sensors $T_S$ is updated to more frequent values, as described above.

In one embodiment, the correspondence between the parameters $k_p$ estimated by the two estimation procedures is considered verified if the two $k_p$ values estimated by the two estimation procedures differ by less than a threshold value. Preferably, the threshold value is set substantially equal to the lower value $k_p$ estimated by the two estimation procedures, i.e:

$$\left|k_{p,1} - k_{p,2}\right| < min\{k_{p,1}; k_{p,2}\}$$

where $k_{p,i}$ is the $k_p$ value estimated by the first estimation procedure, and $k_{p,i}$ is the $k_p$ value estimated by the other estimation procedure.

Even more preferably, the verification of the correspondence between the $k_p$ parameters estimated by the two estimation procedures envisages a second requirement. In particular, this correspondence is considered verified if it is also found that the uncertainty - e.g., the standard deviation - of the lower value of the uncertainties associated with the $k_p$ parameters estimated by the two estimation procedures is the smallest $k_p$ value estimated by the two estimation procedures, i.e:

$$\left|\sigma_{p,1} - \sigma_{p,2}\right| < min\{k_{p,1}; k_{p,2}\}$$

where $\sigma_{p,1}$ is the standard deviation of the $k_p$ values estimated by a first estimation procedure, and $\sigma_{p,2}$ is the standard deviation of the $k_p$ values estimated by the other estimation procedure.

The controller 201 may be a controller of a known type which acts on the basis of the ambient temperature value Tc received as input and provides as output the new set-point value of the delivery temperature of the vector fluid $T_{DSP}$ to reach the desired ambient temperature value.

Preferably, the control unit 20 is configured to operate in dual-mode: the first mode is linear control, while the second mode is on-off control. The first mode provides exact compensation for variations in heat load, while the second mode ensures rapid system response when the controlled variable - the delivery water temperature - is far from the set-point value.

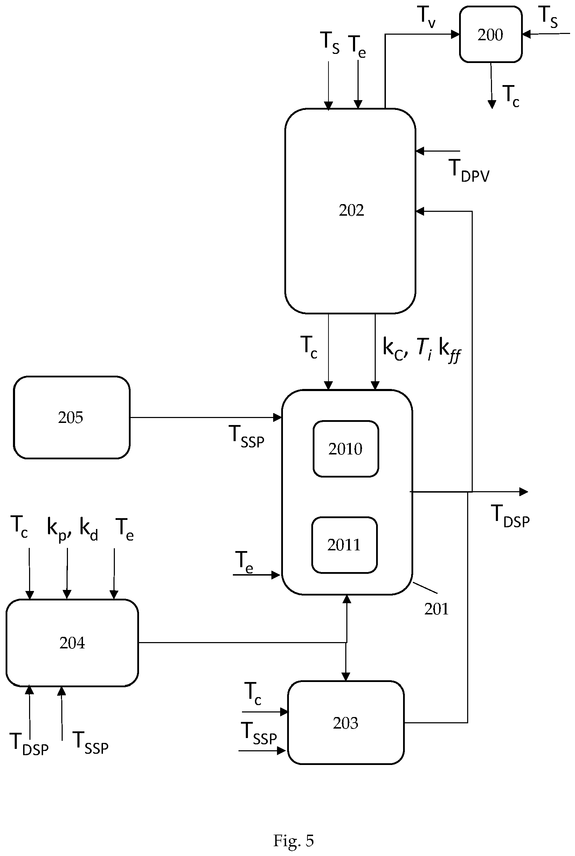

In the embodiment illustrated in Figure 5, the control unit 20 in addition to the components already mentioned includes an on-off module 203 that manages the on-off control mode of the control unit, while the controller module 201 manages the continuous variable control mode, also referred to as continuous control mode for brevity in the following. In addition, the control unit includes a supervisor module 204 configured to manage the operation of the other components of the control unit 20. Preferably, the control unit 20 also comprises a planner or scheduler module 205 configured to store and impose one or more ambient temperature set-point values $T_{SSP}$, for example according to a schedule defined on an hourly basis.

In the example considered, the controller 201 comprises a training module 2010 configured to operate as a min-max controller and a continuous control module 2011 configured to operate as a continuous controller of the heating system.

In particular, the supervisor module 204 is configured to enable the min-max module 2010 simultaneously with the initial activation of the heating system after installation of the heating system in the building. The min-max module 2010 makes it possible to minimise the learning time of the mathematical model for estimating the ambient temperature Tv - i.e. in the case of formula (1) the time for estimating the parameters $k_p$. In fact, at the first activation of the heating system, the mathematical model referred to in formula (1) above is not yet defined, as the values of the parameters $k_p$ and $k_d$ are not known.

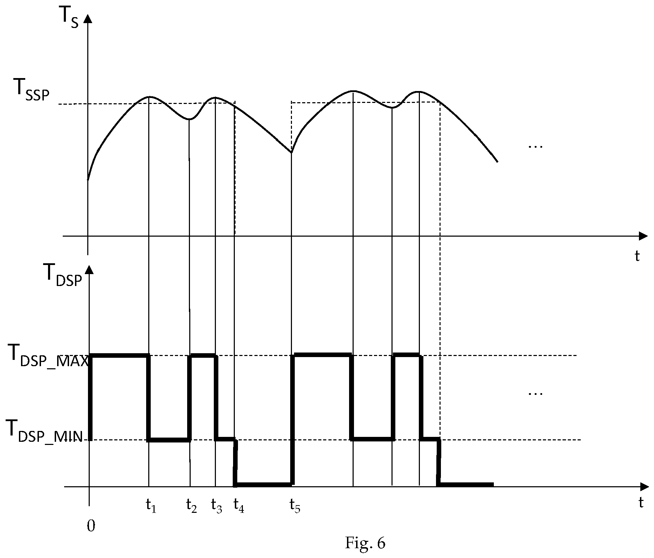

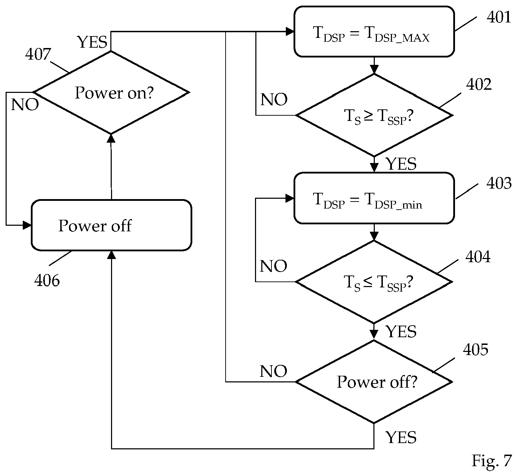

Advantageously, the min-max module 2010 is configured to vary the set-point value $T_{DSP}$ of the delivery water temperature discretely between a minimum value $T_{DSP\_MIN}$ and a maximum value $T_{DSP\_MAX}$, as illustrated in the quality graphs in figure 6 and the flow diagram in figure 7. The analysis of the disturbances in the thermal system, substantially consisting of the building 100, caused by this operating mode of the controller 201 makes it possible to obtain reliable ambient temperature estimates Tv in a short time and, at the same time, ensure that the desired temperatures are maintained inside the building.

In detail, when the heating system is first switched on following its installation, the supervisor module 203 commands the controller 201 to operate in min-max controller conditions 2010 (initial step 401).

The min-max module 2010 controls the burner 10 by setting the set-point value of the delivery water temperature to the maximum value $T_{DSP\_MAX}$, which determines the heating of the delivery water and consequently of the temperature measured by the sensors $S_i$ inside the building (t = 0 in figure 6 and step 403 of the flow chart in figure 7).

The maximum set-point temperature value $T_{DSP\_MAX}$ of the delivery water temperature is maintained until the desired ambient temperature value $T_{SSP}$ provided by the scheduler 205 to the controller 201 is reached or exceeded or, more preferably, when an upper limit value (local maximum of the curve Ts(t) in t = $t_1$ in figure 6) equal to the ambient temperature set-point value $T_{SSP}$ plus a first margin $\Delta T_{SSP\_M}$ - for example, between 0.1° C and 0.5°C, preferably equal to 0.2° C - is reached (step 402).

When the ambient temperature $T_S$ detected by the sensors $S_i$ reaches the set-point value $T_{SSP}$ or the upper limit value, the min-max module 2010 switches the set-point value $T_{DSP}$ of the delivery water temperature to the minimum value $T_{DSP\_Min}$, e.g. the minimum delivery temperature value manageable by the boiler (step 403).

This variation leads to a progressive reduction of the ambient temperature $T_S$ inside the building. This reduction continues until the desired set-point value $T_{SSP}$ is exceeded or, more preferably, a lower limit value (local minimum of the curve Ts(t) in t = $t_2$ in figure 6) equal to the ambient temperature set-point value $T_{SSP}$ reduced by a second margin $\Delta T_{SSP\_m}$ - for example, between 0.1° C and 0.5 °C, preferably equal to 0.2° C - (step 404).

Once the ambient temperature set-point value $T_{SSP}$ has been exceeded or the lower limit value has been reached, the min-max module 2010 switches the delivery water temperature back to the maximum set-point temperature value $T_{DSP\_MAX}$, until the ambient temperature set-point value $T_{SSP}$ (local maximum of the Ts(t) in t = $t_3$ curve in figure 6) is reached or exceeded again, and then switches back to the minimum value $T_{DSP\_Min}$ as described above. Preferably, the procedure is iterated until an off condition of the heating system is reached (step 405). In this case, the on-off module 203 forces the burner 10 to switch off (step 406), for example by bringing the set-point value $T_{DSP}$ of the delivery water temperature to a minimum value or, alternatively, by dropping (bringing to zero) the boiler start-up consent (instant t = $t_4$ in figure 6). The activation of the on-off module 203 may be caused by the supervisor module 204 upon reaching a predetermined time - for example, during night-time hours or imposed by a regulation - by means of a command provided to the on-off module 203 or by bringing the ambient temperature set-point value $T_{SSP}$ provided by the scheduler 205 to the on-off module 203 to a minimum value. The operation then returns to the min-max module 2010 of the controller 201 at the next switch-on of the heating system (step 407) - for example, at a predetermined time in the morning - (instant t = $t_5$ in figure 6). In the same way as switching off, the heating system can be switched on by means of a start command given to the min-max module 203 or by bringing the set-point value $T_{SSP}$ to a desired value greater than the current ambient temperature value.

Advantageously, starting with each transition from the minimum value $T_{DSP\_min}$ to the maximum value $T_{DSP\_MAX}$ until the next, opposite transition from the maximum value $T_{DSP\_MAX}$ to the minimum value $T_{DSP\_min}$ the estimation module 202 is configured to detect the trend of the ambient temperature value and to refine and estimate a corresponding $k_p$ value by means of the $k_p$ estimation procedure described above in relation to figure 4 so as to progressively refine the system model.

The controller 201 operates in min-max controller mode as just described, as long as the control unit 20 does not have sufficient history to calculate an average $k_p$ value that is stable over time, for example until as 5 $k_p$ values have been calculated.

Advantageously, the maximum value $T_{DSP\_MAX}$ and the minimum value $T_{DSP\_min}$ are chosen to minimise the number of transitions required to process a sufficient number of $k_p$ value estimates - making the model usable - while allowing the ambient temperature in the building to be controlled to ensure user comfort. The Applicant has determined that it is possible to determine the optimum maximum value $T_{DSP\_MAX}$ and minimum value $T_{DSP\_min}$ by applying the theory of asymptotic properties of prediction error models (PEMs) and the asymptotic theory of Ljung (1985), as defined in L. Ljung, "Asymptotic variance expressions for identified black-box transfer function models," in IEEE Transactions on Automatic Control, vol. 30, no. 9, pp. 834-844, September 1985 and L. Ljung and Z. Yuan, "Asymptotic properties of black-box identification of transfer functions," in IEEE Transactions on Automatic Control, vol. 30, no. 6, pp. 514-530, June 1985.

In particular, the Applicant has determined that it is possible to minimise the time required to obtain the model parameters and to guarantee the comfort of the users by imposing a minimum value $T_{DSP\_min}$ comprised between 30° C and 50° C, preferably equal to 35° C or equal to 40° C and a maximum value $T_{DSP\_MAX}$ comprised between 65° C and 80° C, preferably equal to 70° C or 75° C, in the case of heating systems comprising a boiler that heats water.

When the estimation module 202 computes a reliable model - that is, makes available an average value of $k_p$ and, thus, of $k_d$ that is stable over time, the supervisor module 204 notifies the controller 201 to switch the control mode from min-max to continuous variable control by deactivating the min-max control module 2010 and activating the continuous control module 2011.

In the embodiments, continuous control mode is defined by exploiting the model - described above - used to represent the thermodynamic system of the building and provide the ambient temperature Tv estimate. Preferably, it is contemplated to determine one or more control parameters used by the linear control module 2011 on the basis of the $k_p$ value and, preferably, the $k_d$ value determined by the estimation module 202.

Advantageously, the integral or pseudo-integral nature of the model considered above makes it possible to employ a particularly simple but at the same time particularly effective controller 201. In detail, when the two estimates of the $k_p$ and $k_d$ values converge as described above, these $k_p$ and $k_d$ values are considered sufficiently accurate to allow reliable self-tuning, or autotuning, of the controller 201 to the thermal system - i.e., the building - being controlled. Since the thermal system to be controlled is approximated by an integral or pseudo-integral model, it is possible to apply control by integral system, in particular, it is possible to initially supply the energy necessary to reach the set-point value $T_{SSP}$ in a predefined time, and then the flow temperature can be brought to the minimum equilibrium value necessary to keep the temperature stable by compensating the thermal load of the building - that is, by compensating the heat losses of the building mainly due to the difference between the ambient temperature $T_S$ and the outside temperature $T_e$. Minimisation of the delivery temperature for most of the operating period of the heating system results in minimisation of the return temperature and thus maximises the efficiency of the boiler.

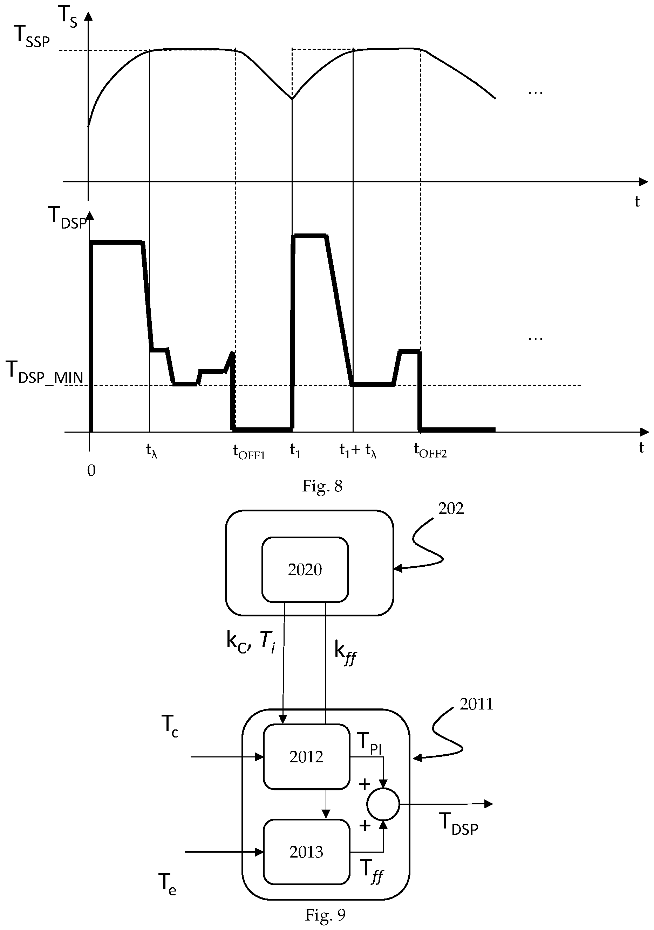

In more detail, the controller 201 in the continuous controller mode envisages determining - on the basis of the values $T_c$, $k_p$, $k_d$ and, preferably, the value $T_e$ - a set-point value $T_{DSP}$ of the delivery temperature of the water such that the ambient temperature in the building reaches the desired set-point value $T_{SSP}$ within a predetermined time ($t = t_\lambda$ in figure 8) - for example, within one hour after the system is switched on. Once the desired set-point value $T_{SSP}$ has been reached, the set-point value $T_{SSP}$ of the delivery water temperature is adjusted to maintain the ambient temperature value at, or at least around, the set-point value $T_{SSP}$. In particular, the controller 201 is configured to determine - on the basis of the values $T_c$, $k_p$, $k_d$ and, preferably, the value $T_e$ - the minimum set-point value $T_{DSP}$ of the delivery water temperature which allows the ambient temperature to be maintained at the set-point value $T_{SSP}$ in the face of variations in the observed values Tc and $T_e$ (time interval between $t = t_\lambda$ and $t = t_{OFF1}$ in figure 8), until the predetermined switch-off of the heating system (time interval between $t = t_{OFF1}$ and $t = t_1$ in figure 8).

In a particularly economical and compact embodiment, the continuous module 2011 of the controller 201 (as schematically illustrated in figure 9) comprises a proportional-integrative block 2012 whose operating parameters are dynamically determined on the basis of the value $k_p$ and the value $k_d$ determined by the estimation module 202. Preferably, the calculation of the control parameters - i.e. a proportional coefficient $k_C$ and an integrative coefficient *Ti* - of the proportional-integrative block 2012 is based on the technique known as lambda-tuning.

Even more preferably, the coefficients $k_C$ and *Ti* are determined from a connection block 2020 of the estimation module 202 and supplied to the proportional-integrative block 2012.

In this case, the proportional coefficient $k_C$ of the proportional-integrative module 2012 is calculated as:

$$k_c = \frac{2\lambda + \Delta tr}{(k_p + 2\sigma_p) \cdot (1 + \Delta tr)^2} \qquad (3)$$

where $\lambda$ is a time within which the set-point value $T_{SSP}$ of the ambient temperature is to be reached, *Δtr* is a time indicating a delay between a change in the delivery temperature and a change in the ambient temperature value $T_S$, while $\sigma_p$ is the uncertainty associated with the value of $k_p$ defined as the standard deviation associated with the set of $k_{p,i}$ values acquired.

In addition, the integrative coefficient *Ti* of the proportional-integrative block 2012 is calculated as:

$$T_i = 0.8 \cdot (2\lambda + \Delta tr) \qquad (4)$$

Preferably, the linear control module 2011 of the controller 201 also comprises a feed-forward block 2013 whose operating parameter - i.e., an advance coefficient - is determined based on the value $k_p$ and the value $k_d$ determined by the estimation module 202.

Even more preferably, the advance coefficient $k_{ff}$ of the feed-forward block 2013 is also determined by the connection block 2020 of the estimation module 202.

For example, the advance coefficient $k_{ff}$ of the feed-forward block 2013 is calculated as:

$$k_{ff} = \frac{-k_d}{(k_p + 2\sigma_p)} \qquad (5)$$

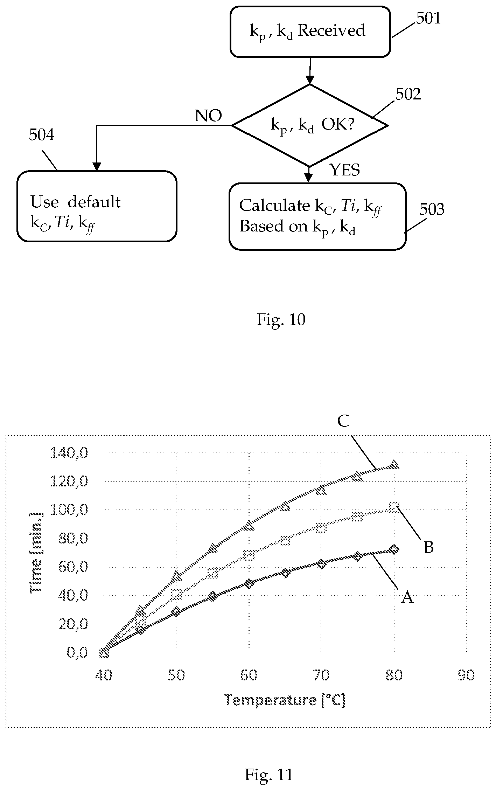

Advantageously, the estimation module 202 implements the following procedure for processing the control parameters of the proportional-integrative block 2012 and the feed-forward block 2013 (a flow chart of which is shown in figure 10).

At each iteration of the procedure that calculates the value $k_p$ and the value $k_d$, performed by the estimation module 202 an indication of the result of the congruence check of the values $k_p$ calculated according to the two procedures is provided to the supervisor module 204 (initial step 501).

If the values $k_p$ and $k_d$ are reliable (step 502), the connection block 2020 of the estimation module 202 calculates (step 503) the coefficients kc e *Ti* of the proportional-integrative block 2012 and the advance coefficient $k_{ff}$ of the feed-forward module 2013 according to formulas (3) - (5) above on the basis of the values $k_p$ and $k_d$. Conversely, if reliable $k_p$ and $k_d$ values are not available, the supervisor module 204 is configured to force the use (step 504) of default coefficients kc, *Ti* and $k_{ff}$ - for example, stored in a memory area of the control unit 20.

During operation in continuous mode, the controller 201 receives as input the ambient temperature value $T_C$ from the selection module 200 and, preferably, the outside temperature value of the building $T_e$. On the basis of these inputs and the set-point value $T_{SSP}$ of the ambient temperature provided by the scheduler 205, the continuous module 2011 controller 201 determines in real time the set-point value $T_{DSP}$ of the delivery water.

On the basis of the set-point value $T_{DSP}$ of the delivery water, the control unit 20 operates the burner 10 of the building's heating unit in such a way as to reach the desired set-point value $T_{SSP}$ within the set time $\lambda$ and thus maintain the building's ambient temperature at the set-point value $T_{SSP}$ or, at least, in its vicinity.

In the exemplary case of the controller 201 equipped with the proportional-integrative block 2012 and the feed-forward block 2013, the set-point value $T_{DSP}$ of the delivery water is defined by the combination of the outputs of the modules 2012 and 2013 as described below and illustrated by the flow chart in figure 11.

As soon as the system is switched on, the feed-forward block 2013 is configured to compensate (step 601) for heat dispersion due to the difference between the ambient temperature inside the building and the outside temperature. In particular, the feed-forward block 2013 provides an output value $T_{ff}$ given by the combination of the outdoor temperature $T_e$ and the advance coefficient $k_{ff}$

$$T_{ff} = k_{ff} \cdot Te \qquad (6)$$

The proportional-integrative block 2012 is configured to cancel (step 602), or at least minimise, a difference between the ambient temperature and the desired set-point value $T_{SSP}$. In detail, it provides an output value $T_{PI}$ provided by the difference between the ambient temperature set-point value $T_{SSP}$ and the ambient temperature value $T_c$ provided by the selection module 200 combined with the control coefficients kc and *Ti:*

$$T_{PI} = k_C \cdot \left[ \left( T_{SSp} - T_C \right) + \frac{1}{T_i} \int \left( T_{SSp} - T_C \right) dt \right] \qquad (7)$$

The output values of the blocks 2012 and 2013 are then combined (step 603), preferably summed, with each other to determine an overall output value corresponding to the set-point value $T_{DSP}$ of the delivery water temperature ($T_{DSP} = T_{PI} + T_{ff}$).

The set-point value $T_{DSP}$ of the delivery water temperature is then recalculated at each (step 604) control cycle performed by the control unit 20 (typically once per minute, more generally with a period such as to ensure a rapid response of the system to a variation of the variables observed by the control unit 20) and by first recalculating the control parameters kc, *Ti* and $k_{ff}$ as described above (step 606) in case the variation of at least one of the values $k_p$ and $k_d$ is verified (step 605).

The preceding steps of the procedure are iterated during the operating period of the heating system (step 607) while outside this operating period the heating system is switched off (step 608) by means of the on-off module 203 which forces the shutdown of the burner 10 - in a similar manner as described above - until the beginning of the next operating period in which the continuous module 2011 of the controller 201 forces the re-ignition of the burner 10.

Preferably, at each boiler start-up, the estimation module 202 is configured to detect the trend of the ambient temperature value from start-up to the time of reaching the desired set-point value $T_{SSP}$ and estimate a corresponding value $k_p$ by means of the $k_p$ estimation procedure described above in relation to figure 4 so as to progressively refine the thermal system model.

In one embodiment, the control unit 20 is configured to exploit the thermal inertia of the thermal system of the building or parts thereof - such as, for example, the radiators 106 - in order to reduce the energy consumption of the heating system, without affecting the comfort of the users.

The estimation module 202 is configured to estimate an operating temperature $T_{OP}$, which is defined as the weighted average between the ambient temperature measured by the sensors Si and the radiant temperature $T_{RAD}$ to which a user is subjected within a portion of the building - for example, a residential unit or a room.

In one embodiment, a reference radiant temperature $T_{RAD}$ is defined according to the following formula - suitable for wall-mounted radiators (radiators):

$$T_{RAD} = \frac{\alpha_1 \cdot (T_C - 2) + \alpha_2 \cdot (T_C + 2) + \alpha_3 \cdot T_C + \beta \cdot T_{DPV}}{\alpha_1 + \alpha_2 + \alpha_3 + \beta} \qquad (8)$$

wherein the term $\alpha_1 \cdot (T_C - 2)$ is indicative of the radiant temperature of the floor, $\alpha_2 \cdot (T_C + 2)$ is indicative of the radiant temperature of the ceiling, the term $\alpha_3 \cdot T_c$ is indicative of the radiant temperature of the walls and the term $\beta \cdot T_{DPV}$ is indicative of the radiant temperature of the radiator 106 or radiators 106 positioned in the portion of the building. Furthermore, the coefficients $\alpha_1, \alpha_2, \alpha_3, \beta$ are associated with floors, ceilings, walls and radiators, respectively, and are coefficients proportional to the area of each surface in relation to the total area within the portion of the building considered. In one embodiment, the reference radiant temperature $T_{RAD}$ is calculated by considering a square room with a side of 4 m and a wall height of 2.7 m and a single radiator was considered with a radiant surface essentially equal to 1 $m^2$.

The operating or perceived temperature is then, as known in the literature of the sector, calculated as the average between the measured ambient temperature and the radiant temperature, i.e:

$$T_{OP} = \frac{T_C + T_{RAD}}{2} \tag{9}$$

The radiant temperature of the radiators 106 is set equal to the measured delivery water temperature $T_{DPV}$, while the boiler is switched on. Otherwise, the radiant temperature of the radiators 106 becomes unknown once the boiler is switched off, as the circulation of water in the heating system is interrupted. Advantageously, the estimation module 202 is configured to calculate an estimate of the radiant temperature of the radiators 106 as a function of time and/or a cooling time required to reach a predetermined final temperature.

In one embodiment, the estimation module 202 is configured to calculate an estimate of the radiant temperature of the radiators 106 based on a model defined based on the characteristics of the radiators (e.g. size and constituent materials) and the temperature of the radiators at the time of boiler lockout (e.g. set equal to the temperature of the water returning to the boiler).

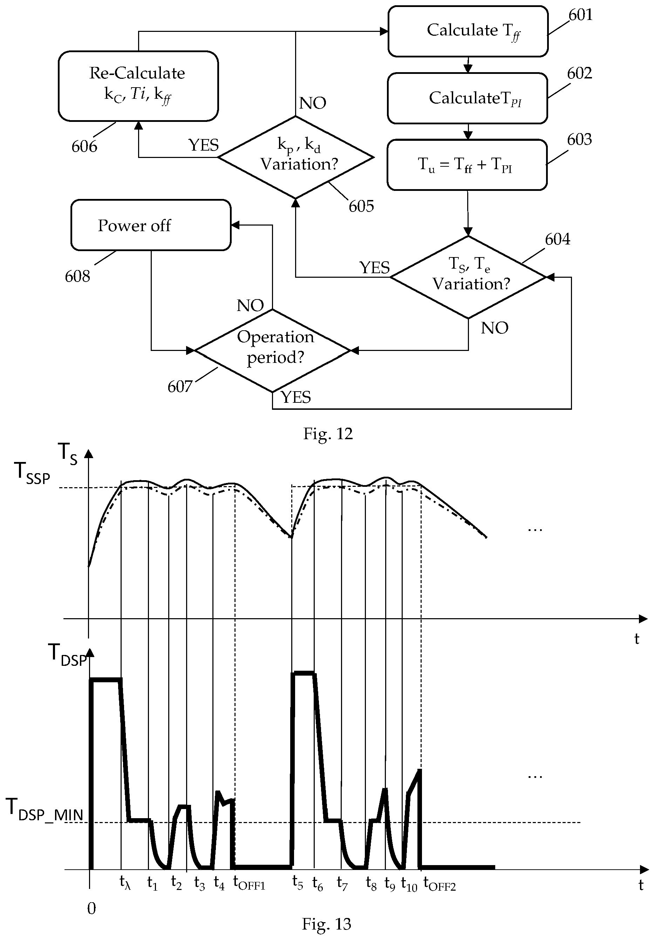

Alternatively, the control unit 20 is configured to allow selection of a radiator cooling curve from the following options: cautionary curve (curve A shown in figure 12), intermediate saving curve (curve B) and high saving curve (curve C). In detail, such curves make it possible to determine the time required for the radiators 106 to reach a desired final radiant temperature value, for example corresponding to the minimum delivery water temperature manageable by the boiler, or the ambient temperature, considering the radiator immersed in fluid at the ambient temperature, for example the desired set-point value $T_{SSP}$, starting from an initial radiator temperature, for example estimated corresponding to the measured temperature $T_{R,S}$ of the water returning to the boiler.

In one embodiment, the curves are described by the following parametric formulae - derived using a concentrated parameter approach and using the Biot number -, where an ambient temperature of 20° C and a final radiant temperature of 40° C have been assumed:

a) cautionary curve

$$t_A = -0,0306\, T_{R,S}^2 + 5,4277\, T_{R,S} - 166,81; \tag{9}$$

b) intermediate saving curve

$$t_B = -0,0431\, T_{R,S}^2 + 7,6459\, T_{R,S} - 234,99, \text{ and} \tag{10}$$

c) high-saving curve

$$t_C = -0,0583\, T_{R,S}^2 + 10,198\, T_{R,S} - 312,18, \tag{11}$$

where $t_{A, B, C}$ corresponds to the cooling time (in minutes) required by the radiators to reach the minimum temperature of 40° C since the boiler was turned off and $T_{R,S}$ is the temperature of the water returning to the boiler at the instant when the supply of heat to the radiators is suspended.

In particular, each of these curves is based on a respective interpolating equation, obtained by averaging the cooling times of radiators made of aluminium, cast iron and steel, and determined for a respective radiator size selected from large (curve A), medium (curve B) and small (curve C). The Applicant has determined that such curves allow for an adequate estimate of the thermal performance of the radiators after the interruption of the flow of heated water regardless of the actual characteristics of the radiators actually installed based on the desired degree of energy saving - thus without requiring the installation engineer to enter precise data regarding the radiators installed in the building.

In general, the operating temperature $T_{OP}$ has a faster dynamic than the ambient temperature as the radiators 106 heat up faster than the surrounding air. By using the operating temperature $T_{OP}$, it is therefore possible to determine boiler shutdown intervals - during the daily operating period thereof - which are generally longer than if only the ambient temperature were used as a reference. This makes it possible to substantially reduce the energy consumption of the heating system in a way that is transparent to users - i.e. without substantially changing the temperature perceived by users - and thus the level of comfort.

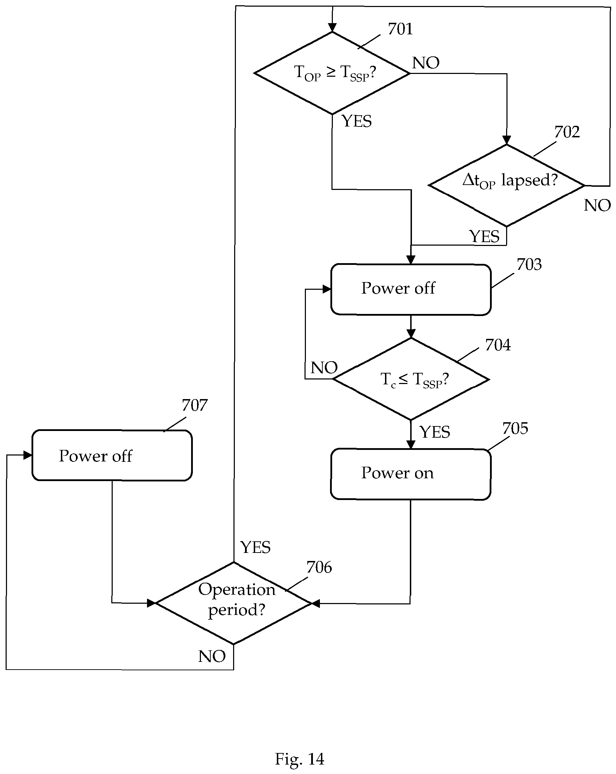

With reference to the graphs in figure 13 and the flowchart in figure 14, starting from the switching on of the heating system the continuous module 2011 of the controller 210 is configured to bring the operating temperature $T_{OP}$ - instead of the ambient temperature - to the desired set-point value $T_{SSP}$ within the time $\lambda$ (step 701 and time interval from t = 0 to t = $t_{\lambda}$ in figure 12).

Once the operating temperature value $T_{OP}$ has reached the set-point value $T_{SSP}$ or, more preferably, an operating upper limit value equal to the set-point value $T_{SSP}$ plus a predetermined margin $\Delta T_{OP\_M}$ - for example, between 0.05° C and 0.2° C, preferably equal to 0.1° C - or the continuous module 2011 maintains the set-point value $T_{DSP}$ of the delivery water temperature at the minimum value $T_{DSP\_min}$ - capable of compensating for variations in the outside temperature Te as described above - for a predetermined time interval $\Delta t_{OP}$ (step 702, time from t = $t_{\lambda}$ to t = $t_1$ in figure 12), the on-off module 203 forces the boiler to be turned off - for example, the on-off module 203 imposes a minimum set-point temperature $T_{DSP}$ for the delivery water temperature (step 703).

The on-off module 203 keeps the boiler off until the value Tc of the ambient temperature is lower than the set-point value $T_{SSP}$ by a predetermined margin value $\Delta T_{SSP\_L}$ - for example, between 0.1° C and 0.5 °C, preferably equal to 0.2° C - (step 704, time interval from t = $t_1$ to t = $t_2$ in figure 12), when the continuous module 2011 imposes a set-point value $T_{DSP}$ of the delivery water temperature different from the minimum (step 705), in particular such as to quickly bring the value of the operating temperature $T_{OP}$ back to the set-point value $T_{SSP}$. Preferably, it is planned to impose a dead-band $\Delta t_{DB}$ between boiler shutdown and subsequent restart, so as to limit the frequency of switching the boiler on and off.

The steps of the procedure as described above are iterated during the operating period of the heating system (step 706) while outside this operating period the heating system is switched off (step 707, from t = $t_{OFF1}$ in figure 12) by means of the on-off module 203 which forces the shutdown of the burner 10 - in a similar manner as described above - until the beginning of the next operating period in which the continuous module 2011 of the controller 201 forces the re-ignition of the burner 10.

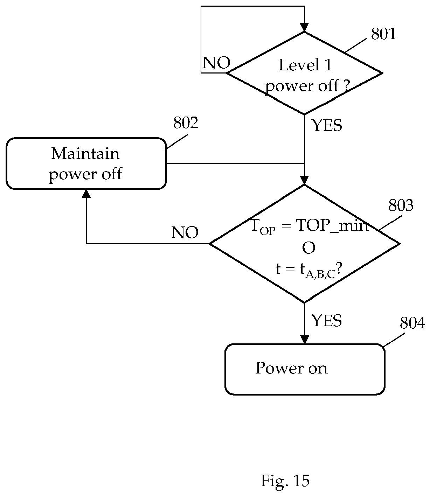

Alternatively or additionally, the control unit 20 is configured to detect a shutdown of the boiler imposed by an internal circuitry of the boiler - the so-called control level 1 - when a limit value is exceeded, preferably equal to the set-point value $T_{DSP}$ of the delivery water temperature increased by a margin value - for example, equal to 4° C (step 801 of the flow chart in figure 15). Upon detecting the shutdown, the control unit 20 is configured to prevent a restart of the boiler controlled by the internal boiler circuitry (step 802) until it detects that the operating temperature is substantially equal to a desired temperature - for example, substantially equal to the ambient temperature- or the cooling time has elapsed (step 803). For example, the on-off module 203 is configured to forcibly keep the boiler off until the value of the operating temperature $T_{OP}$ equals the value of the ambient temperature Tc or is equal to the average of the ambient temperature and the minimum radiant temperature, or after a time corresponding to the cooling time $t_{A, B, c}$ has elapsed. Subsequently, the continuous module 2011 of the controller 201 imposes a set-point value $T_{DSP}$ of the delivery water temperature allowing the boiler to be reactivated (step 804).

The implementation of at least one, preferably both, of the procedures described above allows the boiler to be kept off for as long as possible by exploiting the radiation of the heat accumulated by the radiators - a condition known as 'coasting' or 'sailing' in technical jargon. Thanks to the coasting obtained in this way, it is possible to guarantee the comfort of the users and, at the same time, prevent continuous switching on/ off due to the level 1 circuitry of the boiler, which is inefficient both from an energy and thermal point of view.

The invention thus conceived is susceptible to several modifications and variations, all falling within the scope of the inventive concept.

For example, in one embodiment, it is envisaged to control the temperature of the vector fluid based on the temperature estimates generated by the mathematical model when there is a breakdown in communication between the sensors located inside the building and the control unit or the data received at the control unit is corrupted.

In a simplified embodiment (not illustrated), it does not include the min-max module 2012. In this case, the control unit 20 contemplates using the on-off module 203 to perform the initial procedure necessary to acquire the data required to allow the estimation module 202 to construct a reliable model of the building's thermal system.

In an alternative embodiment (not illustrated), the control unit 20 provides for combining, e.g. summing, an outdoor temperature compensation curve $T_e$ - like a climate curve - to the minimum value $T_{DSP\_min}$ and to the maximum value $T_{DSP\_MAX}$. This improves the operating efficiency of the system during min-max operation, at least partially compensating for variations in the thermal load due to outside temperature $T_e$ variations.

In one embodiment, it is planned to implement the on-off module 203 adaptively. In particular, the on-off module is configured to calculate a variable set-point value on the basis of the integral or pseudo-integral mathematical model developed by the module 202. In detail, the on-off module 203 is configured to calculate a regulation value $e_I$ to be combined, in general subtracted, from the set-point value $T_{SSP}$, leading to an earlier shutdown of the boiler and thus reducing the consumption of the heating system.

Preferably, the variable set-point value is processed starting from the ambient temperature set-point value $T_{SSP}$ or from a set-point value of the operating temperature on the basis of the values $k_p$ and $k_d$ processed by the module 202 and the delay time to of the heating system - indicative of thermal inertia of the heating system -, i.e., the time required to heat the radiators and heat the room in the building.

In particular, it is possible to identify the threshold value $e_l$ according to the following relationship:

$$e_l = k_p \cdot t_D \cdot \Delta T_D + k_d \cdot t_D \cdot \Delta T_e. \tag{12}$$

The Applicant has determined that it is possible to assume a delay time to substantially between 5 and 15 minutes, preferably 10 minutes, in the case of a heating system using water as the vector fluid and radiators as the heating elements.

In a different embodiment instead of the adaptive threshold $e_l$ the operating temperature and a fixed threshold is used to achieve the same control purpose.

In a different embodiment (not illustrated), the on-off module 203 is configured to also control the reaching of the set-point value $T_{SSP}$ of the ambient temperature by imposing operation at maximum boiler power - for example, by imposing a set-point value $T_{DSP}$ of the delivery water temperature equal to the maximum temperature reachable by the boiler - in order to minimise the time to reach the set-point value $T_{SSP}$ at the cost of higher power consumption during the start-up phase.

Of course, there is nothing to prevent providing a different continuous control module 2011, for example, including a PID block or configured to implement predictive control instead of a PI block and an FF block. Accordingly, the connection block 2020 of the estimation module 202 will be configured to calculate and provide appropriate control parameters to the continuous control module 2011. Preferably, predictive controller is a Model Predictive Control (MPC), optionally configured to acquire future external temperature values, for example, from a remote entity external to the heating system such as a server implementing a weather forecast service.

Similarly, there is nothing to prevent the use of a criterion other than λ-tuning to determine the parameters of the proportional-integrative block 2012, just as the feed-forward block 2013 may involve a more complex transfer function including, for example, one or more filters.

In an alternative embodiment, the feed-forward block involves acquiring at least one predicted outside temperature value $T_e$ - for example, provided by an external entity, as described above - and calculating an output value $T_{ff}$ as a function of the current outside temperature value and one or more future temperature values. Preferably, the output value $T_{ff}$ will be calculated as the sum of the products of each outside temperature considered by a corresponding advance coefficient. Preferably, each advance coefficient is calculated by means of the $k_p$ and $k_d$ values estimated by the model based on the outside temperature considered.

In other embodiments, it is envisaged to use the operating temperature $T_{OP}$ as the ambient reference temperature even without implementing the coasting procedures described above. In dual mode, there is nothing to prevent the implementation of coasting procedures using a set-point value $T_{SSP}$ plus an operating margin - for example, in the order of tenths of a degree Celsius.

In one embodiment (not shown), the control unit includes a diagnostic system, or fault diagnosis, configured to analyse the performance of the continuous control module 2011 in order to detect any malfunctions - for example, too slow a response, excessive ambient temperature fluctuations, boiler in maximum or minimum saturation, etc. - and, in response to these malfunctions, switch the building management to normal on-off control - and, in response to these malfunctions, switch building management to normal on-off control. For example, the fault diagnosis system can be implemented by the supervisor module 204.

In addition, the control unit can implement an early switch-off procedure to reduce the length of the switch-on period on the other hand, exploiting the thermal inertia of the radiators and possibly of the building itself. This reduces the overall consumption by reducing the overall daily operation time of the heating system. Advantageously, the optimal switch-off advance times are calculated on the basis of the processed thermal system model of the building, and the outside temperature, applying the principle of one-step prediction logic.

Similarly, the control unit can implement a procedure to vary the switch-on time according to the current and/or predicted outside temperature (acquired from an external entity as described above). In this way, it is possible to adapt the switch-on timing of the heating system to the actual environmental conditions, making it possible to reduce the power required to reach the desired ambient temperature in unfavourable climatic conditions or to delay the heating system switch-on in favourable climatic conditions, thus reducing the operating period of the heating system.

Furthermore, in a highly configurable embodiment (not illustrated), the control unit 20 is configured to receive - for example, from an installation technician via a user interface - characteristic parameters of the radiators 106 installed in the building or average values of the characteristic parameters if radiating elements of different types are installed in the building. These characteristic parameters include, but are not limited to, a radiator size - for example, selectable between small, medium and large size depending on the volume of the radiator - and a radiator material - for example, selectable between aluminium, cast iron and steel. The control unit 20 is then configured to calculate the radiant temperature of the radiators and/or its trend over radiator time according to the entered characteristic parameters. On the contrary, there is nothing to prevent - in a simplified embodiment (not illustrated) - defining the operating temperature $T_{OP}$ as equal to the ambient temperature plus an offset based on an estimate of the thermal characteristics of the radiators 106.

It will be clear to a person skilled in the art that control unit 20 can be equipped with one or more additional modules. In the example illustrated in figure 15, the control unit 20 comprises a reference trajectory module 206 and, preferably, a comfort estimation module 207.

In detail, the scheduler 205 provides temperature set-point values $T_{SSP}$ to the reference module 205 which is configured to define a time-variable set-point value $T_{SSP}(t)$, which assumes the desired set-point values and defines transients to minimise the energy consumed by the system during the transition from one set-point value to the next. For example, when the thermal load is compensated and the action of the proportional-integrative block 2012 and feed-forward block 2013 is reduced, the rate of growth of the ambient temperature towards the desired set-point value $T_{SSP}$ is decreased, in order to show the proportional-integrative block 2012 a smaller control error and thus minimise the control effort. Thanks to this configuration, it is possible to slow down the achievement of the set-point value $T_{SSP}$, reducing the energy consumed by the heating system, without causing discomfort to the building's users.

The comfort estimation module 206 allows the identification of a temperature perceived by the user based on a plurality of input information - in accordance with P. O. Fanger, " Thermal comfort analysis and applications in environmental engineering", R.E. Krieger Pub. Co., 1982. In detail, it is planned to control and regulate a thermo-hygrometric comfort variable called $T_{PMW}$ instead of the ambient temperature of the building. This $T_{PMW}$ variable is calculated by combining a plurality of measurements taken by sensors and information provided by the user - e.g. through a user interface - or approximated according to season, time of day and/or intended use of the building. Preferably, the acquired information comprises two or more of: the ambient temperature, a measurement of ambient humidity - for example, by means of a humidity sensor that can be easily integrated into the ambient temperature sensors -, a radiant temperature of the radiators 106 - for example, estimated as a function of the boiler delivery temperature and the type of radiators 106 - air speed, an activity performed by the users and a type of clothing worn.

The comfort variable $T_{PMW}$ is calculated as a temperature perceived by the building users and is used as a reference value instead of the ambient temperature value Tc in the procedures described above. In this way, it is possible to reduce, or at least calibrate, the consumption of the heating system while ensuring that the user perceives a comfortable temperature.

In one embodiment, the heating system comprises two or more separate heating circuits. In this case, the control unit 20 is configured to perform an optimisation of the thermal balancing of the circuits, which involves removing heat from the more thermally advantaged or lower activity circuits and moving it to the more thermally disadvantaged or higher activity circuits, so as to produce further energy savings in the overall heating system.

Naturally, one or more components of the control unit can be implemented with hardware, firmware, software or combinations thereof.

It will in particular be clear to a person skilled in the art that although the description refers to a central heating system, the controller and/or methods described above can be implemented in other equipment of a different heating system such as a wall thermostat, a condensing boiler for individual residential units, as well as an HVAC system, a heat pump or a remote control system.

Again, although reference has only been made to radiators, it will be clear that procedures exploiting the thermal inertia of radiators are applicable to any heating organ with thermal inertia - for example, radiant tubes or panels integrated into the floor, ceiling or one or more of the walls of the building - without substantial modifications.

**Claims**

1. Method of controlling the temperature of a vector fluid of a heating system (1) for heating at least a portion of a building, said heating system comprising:

   heating means (10) configured to heat the vector fluid in response to a temperature command,
   at least one heating element (106) arranged inside said at least a portion of the building, the at least one radiating element being configured to receive the vector fluid and give heat to the surrounding environment,
   a temperature sensor ($S_1$, $S_2$, $S_3$) configured to measure the ambient temperature inside said at least one portion of the building and transmits a value of the measured temperature,
   a control unit (20) configured to receive the measured temperature value and to generate a command for controlling the heating means based on said measured temperature value,
   wherein the method comprises having the control unit:

- implementing (401-404; 601-608) a continuous control mode which comprises generate a continuous control command to maintain a target temperature value in said at least a portion of the building,
- implementing (405; 607; 701-707; 801-804) an on-off control mode which comprises generate an off command control when the target temperature value is reached in said at least a portion of the building or when the continuous control command is kept at a minimum value for a predetermined period of time, and
- providing one selected between said continuous control command or said off control command to the heating means,

**characterized in that**
the method further comprises having the control unit:

- implementing (300-320) a mathematical model of the integral or pseudo-integral type configured to estimating the value of the ambient temperature as a function of the temperature of the vector fluid and a temperature outside the building, and
- calculating (501-504) at least one operating parameter of the continuous mode on the basis of said mathematical model of the integral or pseudo-integral type.

2. Method according to claim 1, wherein the model of the integral or pseudo-integral type is based on the formula:

$$T_V(t) = \int k_p \cdot (T_{DSP} - T_{ref}) \cdot dt + \int k_d \cdot (T_e - T_{ref}) \cdot dt$$

where $k_p$ is a time-varying gain coefficient associated with the delivery temperature of the vector fluid, while $k_d$ is a time-varying gain coefficient associated with the temperature outside the building, $T_{DSP}$ is the set-point value of the delivery temperature vector fluid, $T_e$ is the temperature outside the building, acquired via a sensor or through the internet or connection to a remote server, $T_{ref}$ is a predefined reference temperature, preferably between 18°C and 22°C and more preferably equal to 20°C.

3. Method according to claim 1 or 2, further comprising having the control unit:

- during the operation in the on-off control mode calculating based on of said mathematical model of type integral or pseudo-integral the target temperature value in at least a reference portion of the building, wherein said at least one reference portion of the building corresponds to the at least a portion of the building to be heated or corresponds to the portion of the building **characterized by** an average ambient temperature lower than the other portions of the building.

4. Method according to any one of the preceding claims, further comprising having the control unit:

when the heating system is activated for the first time, implementing (401-407) a min-max operating mode instead of the continuous control mode, said min-max operating mode being configured for:

- generating (401-402) a first min-max control command such as to impose a heating of the vector fluid as long as the measured temperature is lower than the target temperature value, and
- generating (403-404) a second min-max control command such as to impose a cooling of the vector fluid as long as the measured temperature is higher than a limit value, and

wherein, during each heating of the vector fluid, the method comprises having the control unit:

detecting a trend in the room temperature,
using said detection to calculate the value of at least one operational parameter of the mathematical model of the integral or pseudo-integral type, and
switching from the min-max operation mode to continuous control mode after having calculated a pre-determined number of values of the at least one operating parameter of the mathematical model of the integral or pseudo-integral type.

5. Method according to claim any one of the preceding claims, wherein the heating means comprise a hydraulic circuit through which the heating fluid flows to and from the at least one heating element, and

wherein the method comprises having the control unit:

- estimating (701) a first radiant temperature of the at least one heating element starting from a temperature of the vector fluid at the inlet of the heating means, of the dimensions of the at least one radiating member and of a material with which said radiating member is made, is
- estimating the (701) a second radiant temperature of said at least one portion of the building in which the heating element is positioned,
- determining the (701) the operating temperature as the average of the measured ambient temperature and of a weighted average of radiant temperatures,

wherein the target temperature value is a desired value of the operating temperature, and

wherein the method comprises having the control unit maintaining an off control command during the on-off control mode until the first radiant temperature reaches a predetermined lower limit value or the ambient temperature reaches another predetermined lower limit value.

6. Method according to any one of the preceding claims, wherein said mathematical model of the integral or pseudo-integral type comprises a first gain coefficient associated with the temperature of the vector fluid output from the heating means and a second gain coefficient associated with the temperature outside the building, and

wherein the step of calculating (501-504) at least one operating parameter of the continuous control mode based on said mathematical model of the integral or pseudo-integral type comprises:

- calculating a first operating parameter of the continuous control mode as a function of said first gain coefficient, and
- calculating a second operating parameter of the continuous control mode as a function of said second gain coefficient.

7. Method according to any one of the preceding claims, wherein the continuous mode comprise generating (602) the continuous control command by means of a proportional-integrative function applied to the temperature estimated by the model or to the temperature measured by the sensor and configured to cancel, or at least minimize, a difference between the ambient temperature and the target temperature value, where said proportional-integrative function comprises a proportional coefficient and a integrative coefficient, the proportional coefficient and the integrative coefficient are calculated based on the mathematical model of the integral or pseudo-integral type, so as to keep the temperature of the vector fluid outputting the heating means at a minimum value.

8. Method according to claim 7, wherein the continuous control mode further comprises:

computing (601) a feed-forward term by means of a feed-forward function applied to a temperature outside the building, said feed-forward function comprising a feed-forward coefficient multiplied by the temperature outside the building, and wherein the feed-forward coefficient is calculated based on the mathematical model of the integral or pseudo-integral type, and

computing (603) the continuous control command as the combination of the result of the proportional-integrative function and the feed-forward term .

9. Method according to claim 8, wherein the step of computing (603) the continuous control command as the combination of the result of the proportional-integrative function and the feed-forward term comprises sum together the result of the proportional-integrative function and the feed-forward term.

10. Method according to claim any one of previous claims 7 to 9, wherein the proportional coefficient is calculated as:

$$k_c = \frac{2\lambda + \Delta tr}{(k_p + 2\sigma_p) \cdot (1 + \Delta tr)^2}$$

where $\lambda$ is a time within which it is desired to reach the target temperature value, $\Delta tr$ is a time indicating a delay between a change in the temperature of the vector fluid output by the heating means and a change in the value of the room temperature, $k_p$ is a gain coefficient of said mathematical model associated with the temperature of the vector fluid leaving the heating means defined by the mathematical model of the integral or pseudo-integral type, while $\sigma_p$ is the standard deviation associated with parameter $k_p$,

**EP 4 179 260 B1**

the integrative coefficient *Ti* is calculated as:

$$T_i = 0.8 \cdot (2\lambda + \Delta tr)$$

the advance coefficient $k_{ff}$ calculated as:

$$k_{ff} = \frac{-k_d}{(k_p + 2\sigma_p)}$$

where $k_d$ is the gain coefficient of said mathematical model associated with the temperature outside the building defined by the mathematical model of the integral or pseudo-integral type.

11. Method according to claim 5, wherein the continuous control mode comprises processing the continuous control command by means of a predictive control, preferably belonging to the Model Predictive Control (MPC) type, which receives at the input the estimated temperature by the model, or the temperature measured by the sensor, and the temperature outside the building and is configured to reach the target temperature value in the at least a portion of the building within a predetermined time interval starting from the ignition of the heating means.

12. Method according to any one of the preceding claims, comprising that the on-off control mode implemented by having the control unit further :

generating an ignition control command when the measured temperature takes a predetermined limit value, wherein said ignition control command requires the heating means to transfer the maximum amount of heat possible to the vector fluid until reaching the target temperature value of said at least a portion of the building, and switching from the on-off control mode to the continuous control mode when the target temperature value is reached in said at least a portion of the building.

13. Heating system (1), comprising

conduits (103,104) for transporting a vector fluid inside a building,
heating means (10) for heating the vector fluid,
at least one heating element (106) arranged inside at least a portion of the building, the at least one heating element being configured to receive the vector fluid and transfer heat to the surrounding environment,
at least one sensor (S $_1$, S $_2$, S $_3$) configured to perform ambient temperature measurements inside the building (100),
a further sensor adapted to perform measurements of the vector fluid output by the heating means (10),
outside temperature measuring means adapted to provide a measure of the temperature outside the building,
a control unit (20) operatively connected to the at least one sensor, to the further sensor and to the outside temperature measuring means for receiving the temperature measurements and operatively connected to the heating means (10) for controlling the temperature of the vector fluid,
**characterized in that** the control unit (20) is configured to implement a method of controlling the temperature of the vector fluid according to any of the preceding claims.

**Patentansprüche**

1. Verfahren zur Regelung der Temperatur einer Trägerflüssigkeit eines Heizsystems (1) zum Beheizen mindestens eines Abschnitts eines Gebäudes, das Heizsystem umfassend:

Heizmittel (10), die dazu eingerichtet sind, die Trägerflüssigkeit in Reaktion auf einen Temperaturbefehl zu erwärmen;
mindestens ein Heizelement (106), das innerhalb des genannten mindestens einen Abschnitts des Gebäudes angeordnet ist, wobei das mindestens eine Heizelement dazu eingerichtet ist, die Trägerflüssigkeit aufzunehmen und Wärme an die äußere Umgebung abzugeben;
einen Temperatursensor (S$_1$, S$_2$, S$_3$), der eingerichtet ist, um die Umgebungstemperatur innerhalb des genannten mindestens einen Abschnitts des Gebäudes zu messen, und einen Wert der gemessenen Temperatur zu übertragen;

eine Regeleinheit (20), die dazu eingerichtet ist, den gemessenen Temperaturwert zu empfangen und einen Befehl zur Regelung der Heizmittel basierend auf dem gemessenen Temperaturwert zu erzeugen, wobei, nach dem Verfahren, die Regeleinheit eingerichtet ist zum:

- Durchführen (401-404; 601-608) eines kontinuierlichen Regelmodus, der das Erzeugen eines kontinuierlichen Regelbefehls zum Aufrechterhalten eines Zieltemperaturwerts in dem genannten mindestens einen Abschnitt des Gebäudes umfasst;
- Durchführen (405; 607; 701-707; 801-804) eines Ein-Aus-Regelmodus, umfassend das Erzeugen eines Aus-Regelbefehls, wenn der Zieltemperaturwert in dem genannten mindestens einen Abschnitt des Gebäudes erreicht ist oder wenn der kontinuierliche Regelbefehl für einen vorbestimmten Zeitraum auf einem Mindestwert gehalten wird; und
- Bereitstellen eines Regelbefehls, ausgewählt aus dem kontinuierlichen Regelbefehl oder dem Aus-Regelbefehl, an das Heizmittel,

**dadurch gekennzeichnet, dass**
nach dem Verfahren, die Regeleinheit ferner eingerichtet ist zum:

- Durchführen (300-320) eines mathematischen Modells vom Typ Integral oder Pseudo-Integral, das dazu eingerichtet ist, den Wert der Umgebungstemperatur in Abhängigkeit von der Temperatur der Trägerflüssigkeit und einer Temperatur außerhalb des Gebäudes zu schätzen; und
- Berechnen (501-504) mindestens eines Betriebsparameters des kontinuierlichen Modus basierend auf dem genannten mathematischen Modell vom Typ Integral oder Pseudo-Integral.

2. Verfahren nach Anspruch 1, wobei das Modell vom Typ Integral oder Pseudo-Integral auf der Formel basiert:

$$T_V(t) = \int k_p \cdot (T_{DSP} - T_{ref}) \cdot dt + \int k_d \cdot (T_e - T_{ref}) \cdot dt$$

wobei $k_p$ ein zeitlich veränderlicher Verstärkungskoeffizient ist, der mit der Abgabetemperatur der Trägerflüssigkeit verbunden ist, während $k_d$ ein zeitlich veränderlicher Verstärkungskoeffizient ist, der mit der Temperatur außerhalb des Gebäudes verbunden ist, $T_{DSP}$ der Sollwert der Abgabetemperatur der Trägerflüssigkeit ist, $T_e$ die Temperatur außerhalb des Gebäudes ist, die über einen Sensor oder über das Internet oder eine Verbindung zu einem entfernten Server erfasst wird, $T_{ref}$ eine vordefinierte Referenztemperatur ist, die vorzugsweise zwischen 18°C und 22°C liegt und besonders bevorzugt gleich 20°C ist.

3. Verfahren nach Anspruch 1 oder 2, ferner umfassend die Regeleinheit, eingerichtet zum:

- Berechnen des Zieltemperaturwerts in mindestens einem Referenzabschnitt des Gebäudes während des Betriebs im Ein-Aus-Regelmodus basierend auf dem mathematischen Modells vom Typ Integral oder Pseudo-Integral, wobei der genannte mindestens eine Referenzabschnitt des Gebäudes dem mindestens einen Abschnitt des zu beheizenden Gebäudes entspricht oder dem Abschnitt des Gebäudes entspricht, der durch eine durchschnittliche Umgebungstemperatur gekennzeichnet ist, die niedriger als die der anderen Abschnitte des Gebäudes ist.

4. Verfahren nach einem der vorangehenden Ansprüche, wobei die Regeleinheit ferner eingerichtet ist zum:

bei der ersten Aktivierung des Heizsystems, Durchführen (401-407) eines Min-Max-Betriebsmodus anstelle des kontinuierlichen Regelmodus, wobei der Min-Max-Betriebsmodus eingerichtet ist zum:

- Erzeugen (401-402) eines ersten Min-Max-Regelbefehls, um zu bewirken, dass die Trägerflüssigkeit erwärmt wird, solange die gemessene Temperatur niedriger als der Zieltemperaturwert ist; und
- Erzeugen (403-404) eines zweiten Min-Max Regelbefehls, um zu bewirken, dass die Trägerflüssigkeit gekühlt wird, solange die gemessene Temperatur höher als ein Grenzwert ist; und

wobei, während jede Erwärmung der Trägerflüssigkeit, nach dem Verfahren, die Regeleinheit eingerichtet ist zum:

Erkennen einer Tendenz der Raumtemperatur,
Verwenden der genannten Erfassung zum Berechnen des Wertes von mindestens einem Betriebsparameter des mathematischen Modells vom Typ Integral oder Pseudo-Integral; und
Umschalten von dem Min-Max-Betriebsmodus auf den kontinuierlichen Regelmodus, nach dem Berechnen einer vorbestimmten Anzahl von Werten des mindestens einen Betriebsparameters des mathematischen Modells vom Typ integral oder pseudo-integral.

5. Verfahren nach einem der vorhergehenden Ansprüche, wobei die Heizmittel einen hydraulischen Kreislauf umfassen, durch den die Heizflüssigkeit zu und von dem mindestens einen Heizelement fließt, und

wobei, nach dem Verfahren, die Regeleinheit eingerichtet ist zum:

- Schätzen (701) einer ersten Strahlungstemperatur des mindestens einen Heizmittels, ausgehend von einer Temperatur der Trägerflüssigkeit am Einlass des Heizmittels, von den Abmessungen des mindestens einen Strahlungselements und von einem Material, aus dem das Strahlungselement hergestellt ist;
- Schätzen (701) einer zweiten Strahlungstemperatur des genannten mindestens einen Abschnitts des Gebäudes, in dem das Heizelement angeordnet ist,
- Bestimmen (701) der Betriebstemperatur als Durchschnittswert der gemessenen Umgebungstemperatur und eines gewogenen Durchschnittswerts der Strahlungstemperaturen,

wobei der Zieltemperaturwert ein Sollwert der Betriebstemperatur ist, und
wobei, nach dem Verfahren, die Regeleinheit eingerichtet ist zum: Aufrechterhalten eines Regelbefehls während des Ein-Aus-Regelmodus, solange die erste Strahlungstemperatur einen vorbestimmten unteren Grenzwert oder die Umgebungstemperatur einen anderen vorbestimmten unteren Grenzwert erreicht.

6. Verfahren nach einem der vorhergehenden Ansprüche, wobei das mathematische Modell vom Typ Integral oder Pseudo-Integral einen ersten Verstärkungskoeffizienten, der mit der Temperatur der von den Heizmitteln ausgegebenen Trägerflüssigkeit verbunden ist, und einen zweiten Verstärkungskoeffizienten, der mit der Temperatur außerhalb des Gebäudes verbunden ist, umfasst, und
wobei der Schritt des Berechnens (501-504) mindestens eines Betriebsparameters des kontinuierlichen Regelmodus basierend auf dem genannten mathematischen Modell vom Typ Integral oder Pseudo-Integral umfasst:

- Berechnen eines ersten Betriebsparameters des kontinuierlichen Regelmodus in Abhängigkeit von dem ersten Verstärkungskoeffizienten; und
- Berechnen eines zweiten Betriebsparameters des kontinuierlichen Regelmodus in Abhängigkeit von dem zweiten Verstärkungskoeffizienten.

7. Verfahren nach einem der vorhergehenden Ansprüche, der kontinuierliche Regelmodus umfassend das Erzeugen (602) des kontinuierlichen Regelbefehls mittels einer proportional-integrativen Funktion, die auf die durch das Modell geschätzte Temperatur oder auf die durch den Sensor gemessene Temperatur angewendet wird und eingerichtet ist, um einen Unterschied zwischen der Umgebungstemperatur und dem Zieltemperaturwert aufzuheben oder mindestens zu minimieren, wobei die genannte proportional-integrative Funktion einen proportionalen Koeffizienten und einen integrativen Koeffizienten umfasst, wobei der proportionale Koeffizient und der integrative Koeffizient basierend auf dem mathematischen Modell vom Typ Integral oder Pseudo-Integral berechnet werden, um die Temperatur der Trägerflüssigkeit, die das Heizmittel versorgt, auf einem Mindestwert zu halten.

8. Verfahren nach Anspruch 7, wobei der kontinuierliche Regelmodus ferner umfasst:

Berechnen (601) eines Vorwärtskopplungsterms mittels einer Vorwärtskopplungsfunktion, die auf eine Temperatur außerhalb des Gebäudes angewendet wird, wobei die Vorwärtskopplungsfunktion einen Vorwärtskopplungskoeffizienten, multipliziert mit der Temperatur außerhalb des Gebäudes, umfasst, und wobei der Vorwärtskopplungskoeffizient basierend auf dem mathematischen Modell vom Typ Integral oder Pseudo-Integral berechnet wird; und
Berechnen (603) des kontinuierlichen Regelbefehls als Kombination des Ergebnisses der proportional-integrativen Funktion und des Vorwärtskopplungsterms.

9. Verfahren nach Anspruch 8, wobei der Schritt des Berechnens (603) des kontinuierlichen Regelbefehls als die Kombination des Ergebnisses der proportional-integrativen Funktion und des Vorwärtskopplungsterms das Zusammenzählen des Ergebnisses der proportional-integrativen Funktion und des Vorwärtskopplungsterms umfasst.

10. Verfahren nach einem der vorhergehenden Ansprüche 7 bis 9, wobei der Proportionalitätskoeffizient wie folgt berechnet wird:

$$k_c = \frac{2\lambda + \Delta tr}{(k_p + 2\sigma_p) \cdot (1 + \Delta tr)^2}$$

wobei $\lambda$ eine Zeit ist, innerhalb der der Zieltemperaturwert zu erreichen ist, $\Delta tr$ eine Zeit ist, die eine Verzögerung zwischen einer Änderung der Temperatur der von den Heizmitteln abgegebenen Trägerflüssigkeit und einer Änderung des Wertes der Raumtemperatur angibt, $k_p$ ein Verstärkungskoeffizient des genannten mathematischen Modells, der mit der Temperatur der Trägerflüssigkeit, die aus den Heizmitteln austritt, verbunden ist, definiert durch das mathematische Modell vom Typ Integral oder Pseudo-Integral, ist, während $\sigma_p$ die mit dem Parameter $k_p$ verbundene Standardabweichung ist,
wird der integrative Koeffizient Ti wie folgt berechnet:

$$T_i = 0.8 \cdot (2\lambda + \Delta tr)$$

wird der Vorlaufkoeffizient $k_{ff}$ wie folgt berechnet:

$$k_{ff} = \frac{-k_d}{(k_p + 2\sigma_p)}$$

wobei $k_d$ der Verstärkungskoeffizient des genannten mathematischen Modells, der mit der durch das mathematische Modell vom Typ Integral oder Pseudo-Integral definierten Temperatur außerhalb des Gebäudes verbunden ist, ist.

11. Verfahren nach Anspruch 5, wobei der kontinuierliche Regelmodus die Verarbeitung des kontinuierlichen Regelbefehls mittels einer prädiktiven Regelung, vorzugsweise vom Typ Model Predictive Control (MPC), umfasst, die am Eingang die durch das Modell geschätzte Temperatur oder die durch den Sensor gemessene Temperatur und die Temperatur außerhalb des Gebäudes empfängt und dazu eingerichtet ist, den Zieltemperaturwert in dem zumindest einen Abschnitt des Gebäudes innerhalb eines vorbestimmten Zeitintervalls ab der Zündung der Heizmittel zu erreichen.

12. Verfahren nach einem der vorhergehenden Ansprüche, umfassend den Ein-Aus-Regelmodus, **dadurch gekennzeichnet, dass** die Regeleinheit ferner eingerichtet ist zum:

Erzeugen eines Zünd-Regelungsbefehls, wenn die gemessene Temperatur einen vorbestimmten Grenzwert erreicht, wobei der Zünd-Regelungsbefehl von den Heizmitteln verlangt, die maximal mögliche Wärmemenge an die Trägerflüssigkeit zu übertragen, bis der Zieltemperaturwert des genannten mindestens einen Abschnitts des Gebäudes erreicht ist; und
Umschalten von dem Ein-Aus-Regelmodus auf den kontinuierlichen Regelmodus, wenn der Zieltemperaturwert in dem genannten mindestens einen Abschnitt des Gebäudes erreicht ist.

13. Heizsystem (1), umfassend

Leitungen (103, 104) für den Transport einer Trägerflüssigkeit innerhalb eines Gebäudes;
Heizmittel (10) zum Erwärmen der Trägerflüssigkeit;
mindestens ein Heizelement (106), das innerhalb mindestens eines Abschnitts des Gebäudes angeordnet ist, wobei das mindestens eine Heizelement dazu eingerichtet ist, die Trägerflüssigkeit aufzunehmen und Wärme an die äußere Umgebung abzugeben;
mindestens einen Sensor ($S_1$, $S_2$, $S_3$), der dazu eingerichtet ist, Messungen der Umgebungstemperatur innerhalb des Gebäudes (100) durchzuführen;
einen weiteren Sensor, der dazu ausgelegt ist, Messungen der von den Heizmitteln (10) abgegebenen Trägerflüssigkeit durchzuführen;
Außentemperaturmessmittel, die dazu ausgelegt sind, eine Messung der Temperatur außerhalb des Gebäudes zu liefern;
eine Regeleinheit (20), die operativ mit dem mindestens einen Sensor, dem weiteren Sensor und dem Außentemperaturmessmittel verbunden ist, um die Temperaturmessungen zu empfangen, und operativ mit dem Heizmittel (10) verbunden ist, um die Temperatur der Trägerflüssigkeit zu regeln,
**dadurch gekennzeichnet, dass** die Regeleinheit (20) dazu eingerichtet ist, ein Verfahren zur Regelung der Temperatur der Trägerflüssigkeit nach einem der vorhergehenden Ansprüche durchzuführen.

**Revendications**

1. - Procédé de contrôle de la température d'un fluide vecteur d'un système de chauffage (1) pour chauffer au moins une partie d'un bâtiment, ledit système de chauffage comprenant :

   des moyens de chauffage (10) configurés pour chauffer le fluide vecteur en réponse à une commande de température,
   au moins un élément de chauffage (106) disposé à l'intérieur de ladite au moins une partie du bâtiment, l'au moins un élément radiant étant configuré pour recevoir le fluide vecteur et transmettre de la chaleur au milieu environnant,
   un capteur de température ($S_1$, $S_2$, $S_3$) configuré pour mesurer la température ambiante à l'intérieur de ladite au moins une partie du bâtiment et transmettre une valeur de la température mesurée,
   une unité de contrôle (20) configurée pour recevoir la valeur de température mesurée et pour générer une commande pour contrôler les moyens de chauffage sur la base de ladite valeur de température mesurée,

   le procédé comprenant faire en sorte que l'unité de contrôle :

   - met en oeuvre (401-404 ; 601-608) un mode de contrôle continu qui comprend générer une commande de contrôle continu pour maintenir une valeur de température cible dans ladite au moins une partie du bâtiment,
   - met en oeuvre (405 ; 607 ; 701-707 ; 801-804) un mode de contrôle marche/arrêt qui comprend générer une commande de contrôle d'arrêt lorsque la valeur de température cible est atteinte dans ladite au moins une partie du bâtiment ou lorsque la commande de contrôle continu est maintenue à une valeur minimale pendant une période de temps prédéterminée, et
   - communique, aux moyens de chauffage, une commande choisie entre ladite commande de contrôle continu et ladite commande de contrôle d'arrêt,

   **caractérisé par le fait que** le procédé comprend en outre faire en sorte que l'unité de contrôle :

   - met en oeuvre (300-320) un modèle mathématique du type intégral ou pseudo-intégral configuré pour estimer la valeur de la température ambiante en fonction de la température du fluide vecteur et d'une température à l'extérieur du bâtiment, et
   - calcule (501-504) au moins un paramètre de fonctionnement du mode continu sur la base dudit modèle mathématique du type intégral ou pseudo-intégral.

2. - Procédé selon la revendication 1, dans lequel le modèle du type intégral ou pseudo-intégral est basé sur la formule :

$$T_V(t) = \int k_p \cdot (T_{DSP} - T_{ref}) \cdot dt + \int k_d \cdot (T_e - T_{ref}) \cdot dt$$

où $k_p$ est un coefficient de gain variable dans le temps associé à la température de distribution du fluide vecteur, $k_d$ étant un coefficient de gain variable dans le temps associé à la température à l'extérieur du bâtiment, $T_{DSP}$ étant la valeur de consigne de la température de distribution du fluide vecteur, $T_e$ étant la température à l'extérieur du bâtiment, acquise par l'intermédiaire d'un capteur ou par Internet ou une connexion à un serveur distant, $T_{ref}$ étant une température de référence prédéfinie, de préférence entre 18°C et 22°C et, de façon encore davantage préférée, égale à 20°C.

3. - Procédé selon la revendication 1 ou 2, comprenant en outre faire en sorte que l'unité de contrôle :

   - pendant le fonctionnement en mode de contrôle marche/arrêt, calcule, sur la base dudit modèle mathématique du type intégral ou pseudo-intégral, la valeur de température cible dans au moins une partie de référence du bâtiment, ladite au moins une partie de référence du bâtiment correspondant à l'au moins une partie du bâtiment à chauffer ou correspondant à la partie du bâtiment **caractérisée par** une température ambiante moyenne inférieure à celle des autres parties du bâtiment.

**4.** - Procédé selon l'une quelconque des revendications précédentes, comprenant en outre faire en sorte que l'unité de contrôle :

lorsque le système de chauffage est activé pour la première fois, met en oeuvre (401-407) un mode de fonctionnement mini/maxi au lieu du mode de contrôle continu, ledit mode de fonctionnement mini/maxi étant configuré pour :

- générer (401-402) une première commande de contrôle mini/maxi de façon à imposer un chauffage du fluide vecteur tant que la température mesurée est inférieure à la valeur de température cible, et
- générer (403-404) une seconde commande de contrôle mini/maxi de façon à imposer un refroidissement du fluide vecteur tant que la température mesurée est supérieure à une valeur limite, et

pendant chaque chauffage du fluide vecteur, le procédé comprenant faire en sorte que l'unité de contrôle :

détecte une tendance de la température ambiante,
utilise ladite détection pour calculer la valeur d'au moins un paramètre de fonctionnement du modèle mathématique du type intégral ou pseudo-intégral, et
commute du mode de fonctionnement mini/maxi au mode de contrôle continu après avoir calculé un nombre prédéterminé de valeurs de l'au moins un paramètre de fonctionnement du modèle mathématique du type intégral ou pseudo-intégral.

**5.** - Procédé selon l'une quelconque des revendications précédentes, dans lequel les moyens de chauffage comprennent un circuit hydraulique à travers lequel le fluide de chauffage s'écoule vers et à partir de l'au moins un élément de chauffage, et

le procédé comprenant faire en sorte que l'unité de contrôle :

- estime (701) une première température radiante de l'au moins un élément de chauffage à partir d'une température du fluide vecteur à l'entrée des moyens de chauffage, des dimensions de l'au moins un élément radiant et d'un matériau avec lequel est fait ledit élément radiant,
- estime (701) une seconde température radiante de ladite au moins une partie du bâtiment dans laquelle l'élément de chauffage est positionné,
- détermine (701) la température de fonctionnement comme étant la moyenne de la température ambiante mesurée et d'une moyenne pondérée des températures radiantes,

la valeur de température cible étant une valeur souhaitée de la température de fonctionnement, et
le procédé comprenant faire en sorte que l'unité de contrôle maintienne une commande de contrôle d'arrêt pendant le mode de contrôle marche/arrêt jusqu'à ce que la première température radiante atteigne une valeur de limite inférieure prédéterminée ou que la température ambiante atteigne une autre valeur de limite inférieure prédéterminée.

**6.** - Procédé selon l'une quelconque des revendications précédentes, dans lequel ledit modèle mathématique du type intégral ou pseudo-intégral comprend un premier coefficient de gain associé à la température du fluide vecteur en sortie des moyens de chauffage et un second coefficient de gain associé à la température à l'extérieur du bâtiment, et l'étape de calcul (501-504) d'au moins un paramètre de fonctionnement du mode de contrôle continu sur la base dudit modèle mathématique du type intégral ou pseudo-intégral comprenant :

- calculer un premier paramètre de fonctionnement du mode de contrôle continu en fonction dudit premier coefficient de gain, et
- calculer un second paramètre de fonctionnement du mode de contrôle continu en fonction dudit second coefficient de gain.

**7.** - Procédé selon l'une quelconque des revendications précédentes, dans lequel le mode continu comprend générer (602) la commande de contrôle continu au moyen d'une fonction proportionnelle-intégrale appliquée à la température estimée par le modèle ou à la température mesurée par le capteur et configurée pour annuler, ou au moins rendre minimale, une différence entre la température ambiante et la valeur de température cible, ladite fonction proportionnelle-intégrale comprenant un coefficient proportionnel et un coefficient intégral, le coefficient proportionnel et le coefficient intégral étant calculés sur la base du modèle mathématique du type intégral ou pseudo-intégral, de façon à maintenir la température du fluide vecteur en sortie des moyens de chauffage à une valeur minimale.

8. - Procédé selon la revendication 7, dans lequel le mode de contrôle continu comprend en outre :

calculer (601) un terme d'anticipation au moyen d'une fonction d'anticipation appliquée à une température à l'extérieur du bâtiment, ladite fonction d'anticipation comprenant un coefficient d'anticipation multiplié par la température à l'extérieur du bâtiment, et le coefficient d'anticipation étant calculé sur la base du modèle mathématique du type intégral ou pseudo-intégral, et
calculer (603) la commande de contrôle continu comme étant la combinaison du résultat de la fonction proportionnelle-intégrale et du terme d'anticipation.

9. - Procédé selon la revendication 8, dans lequel l'étape de calcul (603) de la commande de contrôle continu comme étant la combinaison du résultat de la fonction proportionnelle-intégrale et du terme d'anticipation comprend faire la somme du résultat de la fonction proportionnelle-intégrale et du terme d'anticipation.

10. - Procédé selon l'une quelconque des revendications précédentes 7 à 9, dans lequel le coefficient proportionnel est calculé comme suit :

$$k_c = \frac{2\lambda + \Delta tr}{(k_p + 2\sigma_p)\cdot(1+\Delta tr)^2}$$

où $\lambda$ est un temps dans lequel il est souhaité d'atteindre la valeur de température cible, $\Delta tr$ est un temps indiquant un retard entre une variation de température du fluide vecteur en sortie des moyens de chauffage et un changement de la valeur de la température ambiante, $k_p$ est un coefficient de gain dudit modèle mathématique associé à la température du fluide vecteur en sortie des moyens de chauffage défini par le modèle mathématique du type intégral ou pseudo-intégral, tandis que $\sigma_p$ est l'écart-type associé au paramètre $k_p$,
le coefficient intégral $T_i$ est calculé comme suit :

$$T_i = 0.8 \cdot (2\lambda + \Delta tr)$$

le coefficient d'avance $k_{ff}$ est calculé comme suit :

$$k_{ff} = \frac{-k_d}{(k_p + 2\sigma_p)}$$

où $k_d$ est le coefficient de gain dudit modèle mathématique associé à la température à l'extérieur du bâtiment défini par le modèle mathématique du type intégral ou pseudo-intégral.

11. - Procédé selon la revendication 5, dans lequel le mode de contrôle continu comprend traiter la commande de contrôle continu au moyen d'un contrôle prédictif, appartenant de préférence au type Contrôle Prédictif de Modèle (MPC), qui reçoit en entrée la température estimée par le modèle, ou la température mesurée par le capteur, et la température à l'extérieur du bâtiment et est configuré pour atteindre la valeur de température cible dans l'au moins une partie du bâtiment dans un intervalle de temps prédéterminé à partir de l'allumage des moyens de chauffage.

12. - Procédé selon l'une quelconque des revendications précédentes, comprenant en outre, dans le mode de contrôle de marche/arrêt mis en oeuvre, faire en sorte que l'unité de contrôle :

génère une commande de contrôle d'allumage lorsque la température mesurée prend une valeur de limite prédéterminée, ladite commande de contrôle d'allumage exigeant que les moyens de chauffage transfèrent la plus grande quantité de chaleur possible au fluide vecteur jusqu'à atteindre la valeur de température cible de ladite au moins une partie du bâtiment, et

commute du mode de contrôle marche/arrêt au mode de contrôle continu lorsque la valeur de température cible est atteinte dans ladite au moins une partie du bâtiment.

**13.** - Système de chauffage (1), comprenant :

des conduits (103,104) pour transporter un fluide vecteur à l'intérieur d'un bâtiment,

des moyens de chauffage (10) pour chauffer le fluide vecteur,

au moins un élément de chauffage (106) disposé à l'intérieur d'au moins une partie du bâtiment, l'au moins un élément de chauffage étant configuré pour recevoir le fluide vecteur et transférer de la chaleur au milieu environnant,

au moins un capteur ($S_1$, $S_2$, $S_3$) configuré pour effectuer des mesures de température ambiante à l'intérieur du bâtiment (100),

un capteur supplémentaire agencé pour effectuer des mesures du fluide vecteur en sortie des moyens de chauffage (10),

des moyens de mesure de température extérieure agencés pour fournir une mesure de la température à l'extérieur du bâtiment,

une unité de contrôle (20) reliée de manière fonctionnelle à l'au moins un capteur, au capteur supplémentaire et aux moyens de mesure de température extérieure pour recevoir les mesures de température et reliée de manière fonctionnelle aux moyens de chauffage (10) pour contrôler la température du fluide vecteur,

**caractérisé par le fait que** l'unité de contrôle (20) est configurée pour mettre en oeuvre un procédé de contrôle de la température du fluide vecteur selon l'une quelconque des revendications précédentes.

Fig.1

Set the room temperature set-point inside the building — 1001

Measure ambient temperature inside the building by means of a sensor — 1002

Generate estimates of the ambient temperature inside the building — 1003

Check the delivey water temperature based on sensor measurements and temperature estimates — 1004

Fig. 2

Fig. 3

Fig. 4

Fig. 5

Fig. 6

Fig. 7

Fig. 8

Fig. 9

Fig. 10

Fig. 11

Calculate $T_{ff}$ /601

Re-Calculate $k_C$, *Ti*, $k_{ff}$

606

YES

$k_p$, $k_d$
Variation?

NO

605

CalculateT$_{PI}$ /602

$T_u = T_{ff} + T_{PI}$ /603

Power off

608

NO

Operation
period?

607

YES

YES

NO

$T_S$, $T_e$
Variation?

/604

Fig. 12

$T_S$

$T_{SSP}$

t

$T_{DSP}$

$T_{DSP\_MIN}$

0  $t_\lambda$  $t_1$  $t_2$  $t_3$  $t_4$  $t_{OFF1}$  $t_5$  $t_6$  $t_7$  $t_8$  $t_9$  $t_{10}$  $t_{OFF2}$  t

Fig. 13

Fig. 14

Fig. 15

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019081501 A
- EP 2009358 A
- EP 0632356 A
- WO 2019129800 A
- CN 107062383

**Non-patent literature cited in the description**

- **L. LJUNG**. Asymptotic variance expressions for identified black-box transfer function models. *IEEE Transactions on Automatic Control*, September 1985, vol. 30 (9), 834-844
- **L. LJUNG** ; **Z. YUAN**. Asymptotic properties of black-box identification of transfer functions. *IEEE Transactions on Automatic Control*, June 1985, vol. 30 (6), 514-530
- **P. O. FANGER**. Thermal comfort analysis and applications in environmental engineering. R.E. Krieger Pub. Co, 1982